(19) **Europäisches Patentamt / European Patent Office / Office européen des brevets**

(11) **EP 4 310 937 A1**

(12) # EUROPEAN PATENT APPLICATION

(43) Date of publication:
**24.01.2024 Bulletin 2024/04**

(21) Application number: **23186424.0**

(22) Date of filing: **19.07.2023**

(51) International Patent Classification (IPC):
**H01M 4/131** (2010.01) **H01M 4/139** (2010.01)
**H01M 4/1391** (2010.01) **H01M 4/36** (2006.01)
**H01M 4/62** (2006.01) **H01M 10/0525** (2010.01)
**H01M 4/04** (2006.01) **H01M 4/02** (2006.01)

(52) Cooperative Patent Classification (CPC):
**H01M 4/131; H01M 4/139; H01M 4/1391;
H01M 4/364; H01M 4/623; H01M 4/625;
H01M 10/0525;** H01M 4/0411; H01M 4/0435;
H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.07.2022 KR 20220091151**

(71) Applicant: **Samsung SDI Co., Ltd.
Yongin-si, Gyeonggi-do 17084 (KR)**

(72) Inventors:
• **Pyun, Ahram**
 **17084 Yongin-si, Gyeonggi-do (KR)**

• **Yoon, Yeonhee**
 **17084 Yongin-si, Gyeonggi-do (KR)**
• **Kim, Sangpil**
 **17084 Yongin-si, Gyeonggi-do (KR)**
• **Lee, Jinhyon**
 **17084 Yongin-si, Gyeonggi-do (KR)**
• **Kwon, Ilkyong**
 **17084 Yongin-si, Gyeonggi-do (KR)**
• **Nam, Hyun**
 **17084 Yongin-si, Gyeonggi-do (KR)**
• **Lee, Donggeun**
 **17084 Yongin-si, Gyeonggi-do (KR)**

(74) Representative: **Gulde & Partner
Patent- und Rechtsanwaltskanzlei mbB
Wallstraße 58/59
10179 Berlin (DE)**

(54) **DRY ELECTRODE FILM, ELECTRODE COMPRISING THE DRY ELECTRODE FILM, AND LITHIUM BATTERY COMPRISING THE ELECTRODE**

(57) A dry electrode film, an electrode including the same, and a lithium battery including the electrode, wherein the dry electrode film includes a dry electrode active material and a dry binder, wherein the dry electrode active material includes a first electrode active material and a second electrode active material, and a ratio (d1/d2) of a particle diameter of the first electrode active material (d1) to a particle diameter (d2) of the second electrode active material is greater than 1 and less than 5, and the dry electrode film is a free-standing film.

FIG. 2

EP 4 310 937 A1

**Description**

**BACKGROUND**

**1. Field**

Embodiments of the present disclosure described herein are related to a dry electrode film, an electrode including the same, and a lithium battery including the electrode.

**2. Description of the Related Art**

In accordance with the emergence of one or more suitable miniaturized, high performance electronic devices, in the field of lithium batteries, high energy density is becoming more important, in addition to miniaturization and weight reduction. For example, high-capacity lithium batteries are becoming important.

An electrode having a high load has been studied in order to implement a lithium battery suitable for the described use.

In an electrode with a high load, the distribution of constituents within the electrode becomes substantially non-uniform and the density near the electrode surface increases. Accordingly, the performance of a lithium battery employing such an electrode is deteriorated.

Therefore, an electrode capable of preventing or reducing deterioration of lithium battery performance is desired.

**SUMMARY**

An object of the present invention is to provide a new dry electrode film with improved mechanical strength, an electrode having improved durability and to provide a lithium battery with improved cycle characteristics.

An aspect according to one or more embodiments is directed toward a new dry electrode film with improved mechanical strength by including a dry electrode active material uniformly (e.g., substantially uniformly) dispersed in the electrode film.

An aspect according to one or more embodiments is directed toward an electrode having improved durability by including the dry electrode film having improved mechanical strength.

An aspect according to one or more embodiments is directed toward a lithium battery with improved cycle characteristics by including the electrode in the lithium battery.

Additional aspects will be set forth in part in the description which follows and, in part, will be apparent from the description, or may be learned by practice of the presented embodiments of the disclosure.

According to the present invention, a dry electrode film includes:

> a dry electrode active material; and a dry binder, wherein
> the dry electrode active material includes a first electrode active material and a second electrode active material,
> a ratio ($d1/d2$) of a particle diameter ($d1$) of the first electrode active material and a particle diameter ($d2$) of the second electrode active material is greater than 1 and less than 5, and
> the dry electrode film is a free-standing film.

According to another embodiment, an electrode includes:

> an electrode current collector; and
> an electrode active material layer on at least one surface (e.g., on one surface or two opposite surface) of the electrode current collector, wherein
> the electrode active material layer includes the dry electrode film according to the previously-described embodiment.

According to another embodiment, a lithium battery includes:

> a positive electrode; a negative electrode; and
> an electrolyte between the positive electrode and the negative electrode, and
> at least one of the positive electrode or the negative electrode is the previously-described electrode.

**BRIEF DESCRIPTION OF DRAWINGS**

The above and other aspects, features, and advantages of certain embodiments of the disclosure will be more apparent from the following description taken in conjunction with the accompanying drawings, in which:

FIG. 1 is a scanning electron microscope image of one surface of an electrode active material layer included in an electrode prepared in Example 1;

FIG. 2 is a particle diameter distribution diagram of a dry electrode active material utilized in Example 1;

FIG. 3 is a particle diameter distribution diagram of a dry electrode active material utilized in Comparative Example 1;

FIGS. 4A-4D show cross-sectional views each being of an electrode according to an example embodiment;

FIG. 5 is a schematic diagram of an electrode according to an example embodiment;

FIGS. 6A-6F show plan views each being of an electrode according to an example embodiment;

FIG. 7 shows a cross-sectional view of an electrode according to an example embodiment;

FIG. 8 shows a side view of an electrode assembly according to an example embodiment;

FIG. 9 shows a side view of an electrode assembly according to an example embodiment.

FIG. 10 shows a front view of an electrode assembly according to an example embodiment;

FIG. 11 is a schematic diagram of a lithium battery according to an embodiment;

FIG. 12 is a schematic diagram of a lithium battery according to an embodiment; and

FIG. 13 is a schematic diagram of a lithium battery according to an embodiment.

**Explanation of reference numerals designating major elements of the drawings**

1, 1000 Lithium battery; 2 Negative electrode;

3 Positive electrode; 4 Separator;

5 Battery case; 6 Cap assembly;

7 Battery structure; 8 Electrode tab;

100 Electrode active material layer; 200 Electrode current collector;

250 Interlayer; 300 Electrode;

300a Positive electrode; 300b Negative electrode;

400 Electrolyte; 500 Electrode assembly

**DETAILED DESCRIPTION**

The present invention is set out in the appended set of claims, wherein the drawings and respective description relate to advantageous embodiments thereof.

Reference will now be made in more detail to embodiments, embodiments of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described, by referring to the drawings, to explain aspects of the present description. As utilized herein, the term "and/or" includes any and all combinations of at least one of the associated listed items. Expressions such as "at least one of," when preceding a list of elements, modify the entire list of elements and do not modify the individual elements of the list.

The present disclosure described hereinafter may be modified in one or more suitable ways, and may have many examples, and thus, certain examples are illustrated in the drawings, and are described in more detail in the specification. However, this does not intend to limit the present disclosure within particular embodiments, and it should be understood that the present disclosure includes all the modifications, equivalents, and replacements within the idea and technical scope of the present disclosure.

Terms utilized herein were utilized to describe particular examples, and not to limit the present disclosure. As utilized herein, the singular of any term includes the plural, unless the context otherwise requires. The terms "include" or "have", utilized herein, indicates the existence of a characteristic, a number, a phase, a movement, an element, a component, a material or a combination thereof, and it should not be construed to exclude in advance the existence or possibility of existence of at least one of other characteristics, numbers, movements, elements, components, materials or combinations thereof. As utilized herein, "/" may be interpreted to refer to "and" or "or" depending on the context.

In the drawings, a thickness is enlarged or reduced to clearly represent one or more suitable layers and regions. The same reference numerals were attached to similar portions throughout the disclosure. When a layer, a film, a region, or a plate is described to be "on" or "above" something else, as utilized herein throughout the disclosure, it not only includes the case in which it is right above something else but also the case when other portion(s) are present in-between. Terms like "first", "second", and/or the like may be utilized to describe one or more suitable components, but the components are not limited by the terms. The terms are utilized merely to distinguish one component from other components.

The term "dry", utilized herein, refers to a state that does not intentionally contact a solvent such as a process solvent, or a state that does not intentionally include a solvent. For example, a dry electrode active material refers to an electrode active material that is not intentionally contacted with a solvent, or an electrode active material that does not intentionally include a solvent. For example, a dry conductive material refers to a conductive material that is not intentionally contacted with a solvent, or a conductive material that does not intentionally include a solvent. For example, a dry binder refers to a binder that is not intentionally contacted with a solvent, or a binder that does not intentionally include a solvent. For example, a binder in a liquid state at room temperature without being mixed with a solvent is a dry binder.

In the present specification, a "particle diameter" of particles indicates an average diameter when the particles are spherical, and an average length of the long axis when the particles are non-spherical. Particle diameters of particles may be measured by utilizing a particle diameter analyzer (PSA). A "particle diameter" of particles is, for example, an "average particle diameter". An average particle diameter is, for example, a median particle diameter (D50). A median particle diameter (D50) is, for example, a particle diameter corresponding to a 50 % cumulative volume calculated from a particle having a small particle diameter in a particle diameter distribution measured by a laser diffraction method.

The term "dry electrode" or "dry electrode film", utilized herein, refers to an electrode or electrode film that does not include a solvent or intentionally does not utilize a solvent in the electrode preparation process. Solvents include process solvents, process solvent residues, process solvent impurities, and/or the like.

The term "free-standing film", utilized herein, includes a binder matrix structure, and as the binder matrix structure supports an electrode film or an electrode layer, the electrode film or electrode layer may become free-standing, or self-supporting. A self-standing electrode film or a self-standing electrode active material layer may be utilized in preparing a lithium battery without a support such as a current collector, by including a binder matrix structure. The free-standing electrode film or free-standing electrode active material layer may have, for example, sufficient film strength or layer strength to be rolled, handled, and/or unrolled without another support.

The term "wet electrode" or "wet electrode film", utilized herein, refers to an electrode or electrode film that includes a solvent or intentionally uses a solvent in the electrode preparation process. The solvents included in the wet electrode or the wet electrode film include process solvents, process solvent residues, process solvent impurities, and/or the like. "Wet electrode" or "wet electrode film" refers to an electrode or an electrode film prepared by drying electrode slurry, and a preparation method thereof includes preparing the electrode slurry including a solvent.

Hereinafter, an electrode according to example embodiments, a lithium battery including the same, and a manufacturing method thereof will be described in more detail.

A dry electrode film according to an embodiment includes a dry electrode active material and a dry binder, wherein the dry electrode active material includes a first electrode active material and a second electrode active material, and a ratio (d1/d2) of a particle diameter of the first electrode active material (d1) to a particle diameter (d2) of the second electrode active material is greater than 1 and less than 5, and the dry electrode film is a free-standing film. The ratio (d1/d2) of the particle diameter (d1) of the first electrode active material to the particle diameter (d2) of the second electrode active material may be, for example, 1.1 to 4.9, 1.3 to 4.7, or 1.5 to 4.5. As the particle diameter of the first electrode active material and the particle diameter of the second electrode active material included in the dry electrode film have a particle diameter ratio within this range, aggregation of the first positive active material in the dry electrode film is effectively suppressed or reduced. By dispersing the first positive active material and/or the binder in the dry electrode film, uniformity of binding between the first positive active material and the binder is improved. As a result, overall mechanical strength of the dry electrode film is improved. In charge/discharge processes of a lithium battery having an electrode including such a dry electrode film, local deterioration due to a volume change of the dry electrode film is suppressed or reduced. As a result, cycle characteristics of the lithium battery including the dry electrode film are improved. When the ratio (d1/d2) of the particle diameter (d1) of the first electrode active material to the particle diameter (d2) of the second electrode active material is 5 or more, the particle diameter of the first electrode active material is increased (e.g., substantially or excessively increased), so that the dry electrode active material becomes substantially similar to a composition including only the first electrode active material, and it may be difficult to suppress or reduce substantially non-uniform distribution of the first electrode active material such as aggregation of the first electrode active material. When the ratio (d1/d2) of the particle diameter (d1) of the first electrode active material to the particle diameter (d2) of the second electrode active material is 1 or less, the first electrode active material and the second electrode active material may have compositions having substantially similar or the same particle diameters, and it may be difficult to suppress or reduce substantially non-uniform distribution of the first electrode active material such as aggregation of the first electrode active material.

A dry electrode film is a self-standing film. The dry electrode film may maintain a film shape without a support. The dry electrode film may be prepared as a separate self-supporting film and then arranged on an electrode current collector.

The dry electrode film includes a dry electrode active material. The dry electrode active material is, for example, an electrode active material that is not impregnated, dissolved, or dispersed in a solvent. The dry electrode active material is, for example, an electrode active material that does not include a solvent or does not come into contact with a solvent.

The dry electrode active material includes a first electrode active material and a second electrode active material. A content (e.g., amount) of a dry electrode active material included in a dry electrode film may be 80 wt% to 99 wt%, 90 wt% to 99 wt%, or 95 wt% to 99 wt%, with respect to the total weight of the dry electrode film.

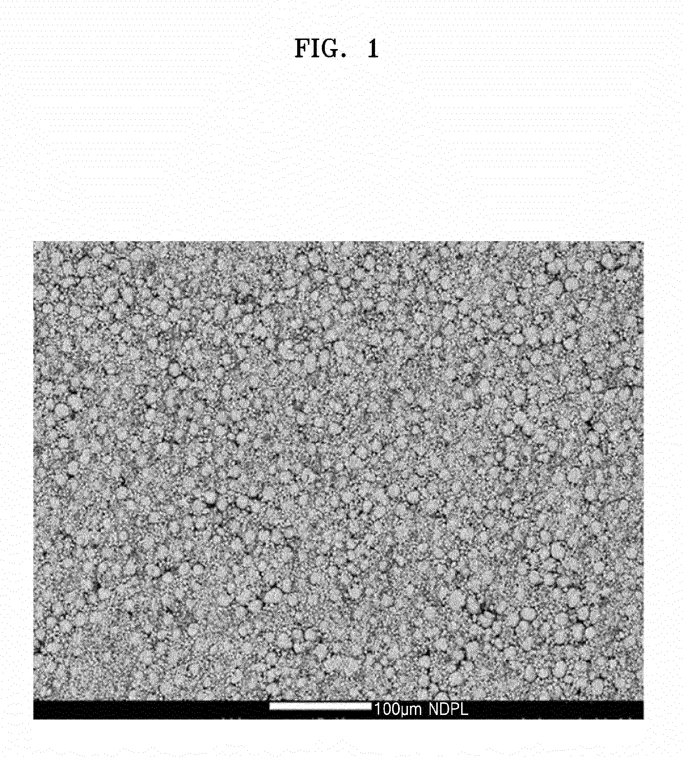

Referring to FIG. 1, a first electrode active material is arranged by being dispersed in the dry electrode film. Because the first electrode active material dispersed in the dry electrode film is coated with a binder, the first electrode active material and the binder may be uniformly bound. Accordingly, an occurrence of local deterioration due to a side reaction between the electrolyte and the first electrode active material in the dry electrode film may be suppressed or reduced. Therefore, cycle characteristics of the lithium battery including the dry electrode film may be improved. On the other hand, when a region is included, wherein in the region the binding of the first electrode active material and the binder is insufficient in the charge/discharge process of a lithium battery including a dry electrode film, for example, when a region is included, wherein in the region the first electrode active material is aggregated to form an aggregate, because there is a portion in this region in which the binding of the first electrode active material and the binder is insufficient, side reactions between the electrolyte and the first electrode active material increases in such a portion, and thus local deterioration may proceed in the dry electrode film. Cycle characteristics of a lithium battery including an electrode may be deteriorated due to such local deterioration.

The first electrode active material may be, for example, a large-diameter electrode active material having a larger particle diameter (e.g., having electrode active material particles with larger particle diameters or a larger average particle diameter) than that of the second electrode active material, and the second electrode active material may be, for example, a small-diameter electrode active material having a smaller particle diameter (e.g., having electrode active material particles with smaller particle diameters or a smaller average particle diameter) than that of the first electrode active material. The first electrode active material and the second electrode active material may be, for example, a first positive active material and a second positive active material.

According to one embodiment the particle diameter (d1) of the first electrode active material is about 10 $\mu$m to about 50 $\mu$m, and the particle diameter (d2) of the second electrode active material is about 1 $\mu$m to about 10 $\mu$m. According to another embodiment the first electrode active material and the second electrode active material are positive active materials.

The first electrode active material and the second electrode active material may be, for example, a first lithium transition metal oxide and a second lithium transition metal oxide, respectively. The first lithium transition metal oxide may be a large-diameter lithium transition metal oxide, and the second lithium transition metal oxide may be a small-diameter lithium transition metal oxide. For example, the first electrode active material may be a large-diameter lithium transition metal oxide, and the second electrode active material may be a small-diameter lithium transition metal oxide. For example, the second electrode active material having a smaller particle diameter than the first electrode active material may be arranged in the gaps between the first electrode active materials. By arranging the second electrode active material particles, which are small-diameter particles, in the gaps between the first electrode active material particles, which are large-diameter particles, the ionic conductivity and electronic conductivity of the dry electrode film including the first electrode active material and the second electrode active material may be concurrently (e.g., simultaneously) improved. In some embodiments, energy density of the electrode including the dry electrode film may be improved. As a result, the energy density and cycle characteristics of the lithium battery including the dry electrode film may be improved. In some embodiments, the first electrode active material and the second electrode active material may be, for example, a first negative active material and a second negative active material.

According to another embodiment the particle diameter (d1) of the first lithium transition metal oxide is about 10 $\mu$m to about 50 $\mu$m, and the particle diameter (d2) of the second lithium transition metal oxide is about 1 $\mu$m to about 10 $\mu$m.

A particle diameter of the first electrode active material may be, for example, 10 $\mu$m to 50 $\mu$m, 10 $\mu$m to 40 $\mu$m, 10 $\mu$m to 30 $\mu$m, 10 $\mu$m to 20 $\mu$m, or 10 $\mu$m to 15 $\mu$m. A particle diameter of the second electrode active material may be, for example, 1 $\mu$m to 10 $\mu$m, 1 $\mu$m to 8 $\mu$m, 1 $\mu$m to 6 $\mu$m, 1 $\mu$m to 5 $\mu$m, 2 $\mu$m to 5 $\mu$m, or 2 $\mu$m to 4 $\mu$m. As the first electrode active material and the second electrode active material respectively have particle diameters in these ranges, energy density and/or cycle characteristics of a lithium battery having a dry electrode film including the first electrode active material and the second electrode active material may be further improved. The particle diameters of the first electrode active material and the second electrode active material may each be, for example, an average particle diameter. The average particle diameter may be measured by using, for example, a laser diffraction method or a measuring device employing a dynamic light scattering method. An average particle diameter is measured by using, for example, a laser scattering particle diameter distribution meter (for example, Horiba's LA-920), and may be a value of a median particle diameter (D50) when 50 % is accumulated from the side of small particles in volume conversion. In some embodiments, the average particle diameter may be, for example, an arithmetic mean value of particle diameters of particles in a scanning electron microscope image measured through image analysis performed by using a software or manually.

The first electrode active material and the second electrode active material may have, for example, a bimodal particle diameter distribution in a distribution profile according to a particle diameter, that is, a particle diameter distribution diagram. For example, a mixture of the first electrode active material and the second electrode active material may have a bimodal particle diameter distribution having two peaks in a particle diameter distribution diagram obtained by utilizing a particle diameter analyzer (PSA) and/or the like. The electrode active material may have a bimodal particle diameter distribution having a first particle diameter peak corresponding to the first electrode active material and a second particle diameter peak corresponding to the second electrode active material in the particle diameter distribution diagram. As the first electrode active material and the second electrode active material have such a bimodal particle diameter distribution, energy density of the electrode including the first electrode active material and the second electrode active material is further improved, and cycle characteristics of a lithium battery having such an electrode may also be improved.

A full width at half maximum (FWHM) of the peak of the first particle diameter may be, for example, 7 $\mu$m or less, 6 $\mu$m or less, or 5 $\mu$m or less. The full width at half maximum (FWHM) of the peak of the first particle diameter may be, for example, 3 $\mu$m to 7 $\mu$m, 3 $\mu$m to 6 $\mu$m, or 3 $\mu$m to 5 $\mu$m. A full width at half maximum (FWHM) of the peak of the second particle diameter may be, for example, 3 $\mu$m or less, 2.5 $\mu$m or less, or 2 $\mu$m or less. The full width at half maximum (FWHM) of the peak of the second particle diameter may be, for example, 1 $\mu$m to 3 $\mu$m, 1 $\mu$m to 2.5 $\mu$m, or 1 $\mu$m to 2 $\mu$m. The full width at half maximum (FWHM) of the first particle diameter peak may be greater than the full width at half maximum (FWHM) of the second particle diameter peak. A ratio (W1/W2) of the full width at half maximum (FWHM, W1) of the first particle diameter peak and the full width at half maximum (FWHM, W2) of the second particle diameter peak may be, for example, 1 (e.g., more than 1) to 10, 1.3 to 5, or 1.5 to 3. As the first electrode active material and the second electrode active material have a full width at half maximum of the particle diameter peak in these ranges, energy density of the electrode having the dry electrode film including the first electrode active material and the second electrode active material is further improved, and cycle characteristics of a lithium battery having such an electrode may also be improved.

According to an embodiment the full width at half maximum (FWHM) of the first particle diameter peak is about 7 $\mu$m or less and the full width at half maximum (FWHM) of the second particle diameter peak is about 3 $\mu$m or less, and the full width at half maximum (FWHM) of the first particle diameter peak is greater than the full width at half maximum (FWHM) of the second particle diameter peak.

A weight ratio of the first electrode active material to the second electrode active material may be, for example, 90:10 to 60:40, 85:15 to 65:35, or 80:20 to 70:30. As the first electrode active material and the second electrode active material have a weight ratio in this range, energy density of the electrode having the dry electrode film including the dry electrode active materials is further improved, and cycle characteristics of the lithium battery having the electrode may also be improved.

A mixture density of the dry electrode film may be, for example, 1 g/cm$^3$ to 5 g/cm$^3$, 2 g/cm$^3$ to 5 g/cm$^3$, 3 g/cm$^3$ to 5 g/cm$^3$, or 3 g/cm$^3$ to 4 g/cm$^3$ The mixture density of the dry electrode film may be derived by measuring the volume and weight of the dry electrode film included as an electrode active material layer in the prepared electrode. As the dry electrode film has a mixture density in this range, a lithium battery including an electrode equipped with the dry electrode film may provide improved energy density and excellent or suitable high-rate characteristics at the same time.

The dry electrode film includes a dry binder. The dry binder is, for example, a binder that is not impregnated, dissolved, or dispersed in a solvent. The dry binder is, for example, a binder that does not include a solvent or does not come into contact with a solvent.

The dry binder includes, for example, a fibrillized binder. The fibrillized binder may serve as a matrix for supporting and binding the dry electrode active material and/or other components included in the dry electrode film. The fibrillized binder may be confirmed to have a fibrous form, for example, with a scanning electron microscope image of the dry electrode film or a cross-section of the electrode. The fibrillized binder has an aspect ratio of, for example, 10 or more, 20 or more, 50 or more, or 100 or more. The dry binder is, for example, polytetrafluoroethylene (PTFE), polyvinylidene fluoride-hexafluoropropylene (PVDF-HFP) copolymer, polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylene-propylene-diene polymer (EPDM), sulfonated-EPDM, styrene butadiene rubber (SBR), fluororubber, a copolymer thereof, and/or the like, but is not necessarily limited thereto, and any binder utilized in manufacturing a dry electrode film may be utilized. The dry binder may particularly include a fluorine-based binder. The fluorine-based binder is, for example, polytetrafluoroethylene (PTFE), polyvinylidenefluoride-hexapropylene (PVDF-HFP) copolymer, or polyvinylidene fluoride (PVDF). A content (e.g., amount) of the dry binder included in the dry electrode film may be, for example, 0.5 wt% to 10 wt%, or 1 wt% to 5 wt%, with respect to the total weight of the dry electrode film. As the dry electrode film includes the dry binder in this range, binding force between the dry electrode film and the electrode current collector is improved, and the electrode including the dry electrode film may maintain high energy density.

According to one embodiment the dry binder is a fibrillized binder and the dry binder comprises a fluorine-based binder.

The dry electrode film may further include, for example, a dry conductive material. The dry conductive material is, for example, a conductive material that is not impregnated, dissolved, or dispersed in a solvent. The dry conductive material is, for example, a conductive material that does not include a process solvent or does not come into contact with a process solvent. The dry conductive material is, for example, a carbon-based conductive material, a metal-based conductive material, or a combination thereof. The dry conductive material includes, for example, a carbon-based conductive material. The carbon-based conductive material is, for example, carbon black, graphite fine particles, natural graphite, artificial graphite, acetylene black, Ketjen black, carbon fibers, carbon nanofibers, etc., but is not limited thereto, and any carbon-based conductive material utilized in the art may be utilized. A content (e.g., amount) of the dry conductive material included in the dry electrode film may be, for example, 0.5 wt% to 10 wt%, or 1 wt% to 5 wt%, with respect to the total weight of the dry electrode film. As the dry electrode film includes the dry conductive material in this range, conductivity of the dry electrode film may be improved, and the dry electrode film may maintain a high energy density. The dry conductive material may be, for example, a porous conductive material. As the dry conductive material is porous, the inside of the dry electrode film including the porous dry conductive material may be easily impregnated with an electrolyte. Therefore, internal resistance of the lithium battery including the dry electrode film may be reduced.

Because the dry electrode film is prepared by a dry method, it does not include a process solvent intentionally added (e.g., exclude any intentionally added process solvent). The dry electrode film does not include, for example, a residual processing solvent. A trace amount of an unintended solvent may remain in the dry electrode film, but the solvent is not a process solvent intentionally added. The dry electrode film is distinguished from a wet electrode film, which is prepared by mixing electrode components and a process solvent to prepare electrode slurry and then drying the electrode slurry to remove some or all of the process solvent.

Tensile strength of the dry electrode film, measured according to ASTM D412, may be 500 kPa or more, 600 kPa or more, or 700 kPa or more. The tensile strength may be, for example, tensile strength at break (e.g., the break or breaking point), which is the tensile strength when the specimen breaks. Tensile strength of the dry electrode film, measured according to ASTM D412, may be 500 kPa to 5,000 kPa, 600 kPa to 2,000 kPa, or 700 kPa to 1,000 kPa. As the dry electrode film has high tensile strength in this range, the mechanical strength of the dry electrode film may be improved. As the dry electrode film has improved mechanical strength, local deterioration due to volume change during charging and discharging of the electrode including the dry electrode film and the lithium battery including the electrode may be suppressed or reduced. As a result, cycle characteristics of the lithium battery may be improved.

The dry electrode film may further include, for example, a sacrificial electrode material. Lithium included in the dry electrode film may be irreversibly consumed in the formation of the solid electrolyte interface (SEI) formed on the surface of the electrode active material during initial charging of the lithium battery including the dry electrode film. Therefore, a content (e.g., amount) of the electrode active material that may actually be utilized for the electrode reaction is reduced compared to the theoretical capacity of the dry electrode film. As the dry electrode film includes the sacrificial electrode material, it is possible to prevent or reduce loss of the electrode active material and improve reversibility of the lithium battery. As a result, cycle characteristics of the lithium battery may be improved. As the sacrificial electrode material is utilized to form a solid electrolyte interface formed on the surface of the electrode active material during initial charging of the lithium battery, irreversible consumption of lithium included in the electrode active material may be suppressed or reduced. The sacrificial electrode material may be, for example, a material having an initial charge/discharge efficiency of 50 % or less of an initial charge/discharge efficiency of the electrode active material during the initial charge/discharge of the lithium battery under the same conditions as the electrode active material. For example, the initial charge/discharge efficiency of the electrode active material may be 90 %, and the initial charge/discharge efficiency of the sacrificial electrode material may be 45 % or less. The sacrificial electrode material may include, for example, $Li_2O$, $Li_2O_2$, $Li_2S$, $Li_3N$, $LiN_3$, $LiF$, $Li_5FeO_4$, $Li2NiO_2$, $Li_6CO_4$, and $Li_2MoO$, or one or more combinations thereof. According to another embodiment the dry electrode film further comprises a sacrificial electrode material. In a preferred embodiment the sacrificial electrode material comprises $Li_2O$, $Li_2O_2$, $Li_2S$, $Li_3N$, $LiN_3$, $LiF$, $Li_5FeO_4$, $Li_2NiO_2$, $Li_6CO_4$, $Li_2MoO$, or one or more combinations thereof.

The dry electrode film may have a structure in which the dry electrode film includes a first dry electrode film and a second dry electrode film arranged on one surface of the first dry electrode film, wherein the first dry electrode film may include an electrode active material, and the second dry electrode film may include a sacrificial electrode film. A second electrode film may be arranged adjacent to the electrolyte in a lithium battery. A thickness of the second dry electrode film may be 1 % to 20 %, 1 % to 10 %, or 1 % to 5 % of a thickness of the first dry electrode film.

An electrode according to another embodiment includes an electrode current collector; and an electrode active material layer arranged on one or both (e.g., opposite) surface(s) of the electrode current collector, wherein the electrode active material layer includes the above-described dry electrode film.

As the electrode includes the dry electrode film, mechanical strength of the electrode is improved, and thus, durability of the electrode is improved. Accordingly, deterioration due to a change in the volume of the electrode may be suppressed or reduced during charging and discharging of the lithium battery including the electrode.

The electrode current collector may additionally include an interlayer arranged on one or both (e.g., opposite) surface(s) of the electrode current collector. The interlayer may be, for example, a coating layer.

A material constituting the electrode current collector may be any material that does not react with lithium, that is, a material that does not form an alloy or a compound with lithium, and has conductivity (e.g., is a conductor). A metallic substrate is, for example, a metal or an alloy. The metallic substrate may include (e.g., consist of), for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The electrode current collector may have a form selected from, for example, a sheet, a foil, a film, a plate, a porous body, a mesoporous body, a through-hole containing body, a polygonal ring body, a mesh body, a foam, and a nonwoven body, but is not necessarily limited to this form, and any form used in the art is possible.

The interlayer may be, for example, arranged directly on one or both (e.g., opposite) surface(s) of the electrode current collector. Accordingly, another layer may not be arranged between the electrode current collector and the interlayer. As the interlayer is arranged directly on one or both (e.g., opposite) surface(s) of the electrode current collector, the binding force between the electrode current collector and the electrode active material layer may be further improved. A thickness of the interlayer is, for example, 30 % or less of a thickness of the electrode current collector. The thickness of the interlayer may be, for example, 0.01 % to 30 %, 0.1 % to 30 %, 0.5 % to 30 %, 1 % to 25 %, 1 % to 20 %, 1 % to 15 %, 1 % to 10 %, 1 % to 5 %, or 1 % to 3% of the thickness of the electrode current collector. The thickness of the interlayer is, for example, 10 nm to 5 $\mu$m, 50 nm to 5 $\mu$m, 200 nm to 4 $\mu$m, 500 nm to 3 $\mu$m, 500 nm to 2 $\mu$m, 500 nm to 1.5 $\mu$m, or 700 nm to 1.3 $\mu$m.

According to one embodiment the electrode current collector comprises an interlayer on the at least one surface of the electrode current collector, and the thickness of the interlayer is about 30 % or less of a thickness of the electrode current collector.

As the interlayer has a thickness in this range, the binding force between the electrode current collector and the electrode current collector active material layer is further improved, and an increase in interfacial resistance may be suppressed or reduced.

The interlayer may include, for example, a binder. As the interlayer includes the binder, the binding force between the electrode current collector and the electrode active material layer may be further improved. The binder included in the interlayer is, for example, a conductive binder or a non-conductive binder. The conductive binder may be, for example, an ion conductive binder, and/or an electron conductive binder. A binder having both (e.g., simultaneously) ionic conductivity and electronic conductivity may belong to (e.g., be) both (e.g., simultaneously) an ion conductive binder and an electron conductive binder. The ion conductive binder is, for example, polystyrene sulfonate (PSS), polyvinylidene fluoride-hexafluoropropylene copolymer (PVDF-HFP), polyvinyl fluoride (PVF), poly vinylidene fluoride (PVDF), polymethyl methacrylate (PMMA), polyethylene oxide (PEO), polyethylene glycol (PEG), polyacrylonitrile (PAN), polytetrafluoroethylene (PTFE), polyethylenedioxythiophene (PEDOT), polypyrrole (PPY), polyaniline, and polyacetylene. The ion conductive binder may include a polar functional group. The ion conductive binder including a polar functional group is, for example, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), Poly(styrene sulfonate) (PSS), lithium 9,10-diphenylanthracene-2-sulfonate (DPASLi$^+$), and/or the like. The electron conductive binder is, for example, polyacetylene, polythiophene, polypyrrole, poly(p-phenylene), poly(phenylenevinylene), poly(phenylenesulfide), polyaniline, and/or the like. The interlayer may be, for example, a conductive layer including a conductive polymer. The binder included in the interlayer may be selected from, for example, binders included in the electrode active material layer. The interlayer may include, for example, the same binder as the binder included in the electrode active material layer. The binder included in the interlayer is, for example, a fluorine-based binder. The fluorine-based binder included in the interlayer is, for example, polyvinylidene fluoride (PVDF). The interlayer is arranged on the electrode current collector, for example, by a dry or wet method. The interlayer may be, for example, a binding layer including a binder.

In one embodiment the interlayer comprises a binder, wherein the binder is at least one selected from among a conductive binder and a non-conductive binder, and is a fluorine-based binder.

The interlayer may include, for example, a carbon-based conductive material. The carbon-based conductive material included in the interlayer may be selected from carbon-based conductive materials included in the electrode active material layer. The interlayer may include the same carbon-based conductive material as the electrode active material layer. As the interlayer includes a carbon-based conductive material, the interlayer may be, for example, a conductive layer. The interlayer may be, for example, a conductive layer including a binder and a carbon-based conductive material.

The interlayer may be arranged on the electrode current collector by a dry method, for example, by deposition such as chemical vapor deposition (CVD), or physical vapor deposition (PVD). The interlayer may be arranged on the electrode current collector by a wet method, for example, by spin coating, dip coating, and/or the like. The interlayer may be arranged on the electrode current collector by, for example, depositing a carbon-based conductive material on the electrode current collector. The dry coated interlayer may include (e.g., consist of) a carbon-based conductive material and may not include (e.g., may exclude) a binder. In some embodiments, the interlayer may be arranged on the electrode current collector by, for example, coating a composition including a carbon-based conductive material, a binder, and a solvent on the surface of the electrode current collector and drying the composition. The interlayer may have a single-layer structure or a multi-layer structure including a plurality of layers.

The electrode current collector according to the embodiment may have a reduced thickness compared to an electrode current collector included in an electrode in the art. Accordingly, the electrode according to an embodiment is distinguished from an electrode in the art that includes a thick film current collector, for example, by including the thin film current collector. A thickness of the electrode active material layer in the electrode including the thin film current collector is relatively increased as the electrode according to the embodiment employs the thin film current collector having a reduced thickness. As a result, energy density of a lithium battery employing such an electrode is increased. A thickness of the electrode current collector including the metal substrate and the coating layer may be, for example, 15 $\mu$m or less, 14.5 $\mu$m or less, or 14 $\mu$m or less. The thickness of the electrode current collector may be, for example, 0.1 $\mu$m to 15 $\mu$m, 1 $\mu$m to 14 $\mu$m, 2 $\mu$m to 14 $\mu$m, 5 $\mu$m to 14 $\mu$m, or 10 $\mu$m to 14 $\mu$m.

In the electrode active material layer, when measured by utilizing the surface and interfacial measuring analysis system (SAICAS), a rate of change of vertical relative force ($F_{VR}$) according to a depth, from a first point to a second point may be, for example, 300 % or less, wherein the first point is separated 5 % from the surface of the electrode active material layer in the direction of the electrode current collector, and the second point is separated 5 % from the surface of the electrode current collector, with respect to the total thickness of the electrode active material layer. The vertical relative force (FVR) refers to the vertical relative binding force. The rate of change of the vertical relative force is, for example, 10 % to 300 %, 10 % to 250 %, 10 % to 200 %, 10 % to 150 %, or 10 % to 100 %. The second point 5 % separated from the surface of the electrode current collector in the direction of the electrode active material layer corresponds to, for example, a point 95 %, with respect to the entire thickness of the electrode active material layer, separated from the surface of the electrode active material layer in the direction of the electrode current collector. The vertical relative force is calculated from Equation 1. For a measurement method utilizing SAICAS, refer to Evaluation Example 1, for example.

Equation 1

Rate of change of vertical relative force (FRV) = [(Maximum value of vertical relative force (FVR1) - Minimum value of vertical relative force (FVR2)) / Minimum value of vertical relative force (FVR2)] × 100

As the rate of change of the vertical relative force is 300 % or less in the electrode active material layer, when measured by using the surface and interfacial measuring analysis system (SAICAS), uniformity of distribution of constituents in electrode may be improved. In some embodiments, because a side reaction and an increase in internal resistance due to substantially non-uniform distribution of components in the electrode active material layer are suppressed or reduced, reversibility of the electrode reaction may be improved. Even in the case of the electrode having a high load, cycle characteristics of the lithium battery may be improved. In some embodiments, as the electrode includes the interlayer, the binding force between the electrode active material layer and the electrode current collector is further improved, and an internal resistance of the electrode is reduced. Therefore, cycle characteristics of the lithium battery including such an electrode may be improved.

In the electrode active material layer, when measured by utilizing SAICAS, a ratio of a second horizontal force ($F_{H2}$) at a second point to a first horizontal force ($F_{H1}$) at a first point may be, for example, 50 % or more, wherein the first point is separated 10 % from the surface of the electrode active material layer in the direction of the electrode current collector, and the second point is separated 10 % from the surface of the electrode current collector in the direction of the electrode active material layer (for example, depth direction), with respect to the total depth from the surface of the electrode active material layer to the surface of the electrode current collector. The first horizontal force ($F_{H1}$) refers to the first horizontal binding force. The second horizontal force ($F_{H2}$) refers to the second horizontal binding force. The ratio of horizontal forces is, for example, 50 % to 100 %, 60 % to 100 %, 70 % to 100 %, 80 % to 100 %, or 90 % to 100 %. The second point 10 % separated from the surface of the electrode current collector in the direction of the electrode active material layer corresponds to, for example, a point 90 %, separated from the surface of the electrode active material layer in the direction of the electrode current collector, with respect to the entire thickness of the electrode active material layer. The ratio of horizontal forces is, for example, stated by Equation 2. For a measurement method utilizing SAICAS, refer to Evaluation Example 2, for example.

Equation 2

Ratio of horizontal forces = [Second horizontal force ($F_{H2}$) / First horizontal force ($F_{H1}$)]

$$\times\ 100$$

As the ratio of the horizontal forces is 50 % or more, when measured by utilizing SAICAS, uniformity of distribution of constituents in the electrode is further improved. As the electrode has the horizontal force within this range, cycle characteristics of the lithium battery employing the electrode are further improved.

The electrode including a dry electrode film is, for example, a positive electrode. The positive electrode includes a positive active material layer, and the positive active material layer includes a positive active material.

The positive active material included by the positive active material layer may be a lithium metal oxide, and any one commonly utilized in the art may be utilized without limitation.

The positive active material may be, for example, at least one complex oxide of lithium and a metal selected from cobalt, manganese, nickel, and one or more combinations thereof, and for specific examples, any compound represented by any one of the formulas described herein may be used, the formulas including: $Li_aA_{1-b}B_bD_2$ (wherein $0.90 \leq a \leq 1$, and $0 \leq b \leq 0.5$); $Li_aE_{1-b}B_bO_{2-c}D_c$ (wherein $0.90 \leq a \leq 1$, $0 \leq b \leq 0.5$, and $0 \leq c \leq 0.05$); $LiE_{2-b}B_bO_{4-c}D_c$ (wherein $0 \leq b \leq 0.5$, and $0 \leq c \leq 0.05$); $Li_aNi1_{-b-c}Co_bB_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (wherein $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_2$ (wherein $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (wherein $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (wherein $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (wherein $0.90 \leq a \leq 1$, $0 \leq b \leq 0.5$, $0 \leq c \leq 0.05$, and $0 < \alpha < 2$); $Li_aNi_bE_cG_dO_2$ (wherein $0.90 \leq a \leq 1$, $0 \leq b \leq 0.9$, $0 \leq c \leq 0.5$, and $0.001 \leq d \leq 0.1.$); $Li_aNi_bCo_cMn_dGeO_2$ (wherein $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (wherein $0.90 \leq a \leq 1$, and $0.001 \leq b \leq 0.1$); $Li_aCoG_bO_2$ (wherein $0.90 \leq a \leq 1$, $0.001 \leq b \leq 0.1$); $Li_aMnG_bO_2$ (wherein $0.90 \leq a \leq 1$, and $0.001 \leq b \leq 0.1$); $Li_aMn_2G_bO_4$ (wherein $0.90 \leq a \leq 1$, and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the formulas representing the previously-described compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

A compound to which a coating layer is added on the surface of the previously-described compound may be used, and a mixture of the above-described compound and the compound to which a coating layer is added may also be utilized. The coating layer added on the surface of the above-described compound may include, for example, coating element compounds such as an oxide of the coating element, a hydroxide of the coating element, an oxyhydroxide of the coating element, an oxycarbonate of the coating element, or a hydroxycarbonate of the coating element. The compounds constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer is selected within a range that does not adversely affect the physical properties of the positive active material. The coating method is, for example, spray coating, dipping, and/or the like. Because a specific coating method may be well understood by those skilled in the art, a detailed description thereof will not be provided.

A content (e.g., amount) of the positive active material included in the positive active material layer may be, for example, 80 wt% to 98 wt%, or 90 wt% to 98 wt%, with respect to the total weight of the positive active material layer.

The positive active material may be, for example, a composite positive active material.

The composite positive active material includes, for example, a core including a lithium transition metal oxide; and a shell arranged along the surface of the core, wherein the shell includes at least one first metal oxide represented by a formula $M_aO_b$ ($0<a\leq3$, $0<b<4$, when a is 1, 2, or 3, b is not an integer); and graphene, the first metal oxide is arranged in a graphene matrix, M is at least one metal selected from groups 2 to 13, 15 and 16 of the periodic table of elements, and the lithium transition metal oxide contains nickel, and a content (e.g., amount) of nickel is 80 mol% or more, with respect to the total number of moles of the transition metals. A shell including a first metal oxide and graphene is arranged on the core of the composite positive active material.

Graphene is difficult to be uniformly coated on the core due to aggregation in the related art. In contrast, the composite positive active material uses a composite including a plurality of first metal oxides arranged on a graphene matrix, thereby preventing or reducing aggregation of graphene, and the shell may be uniformly arranged on the core. Accordingly, by effectively blocking the contact between the core and the electrolyte, side reactions caused by the contact between the core and the electrolyte are prevented or reduced. In some embodiments, reduction of nickel ions ($Ni^{3+}$->$Ni^{2+}$) and cation mixing by the electrolyte are suppressed or reduced, thereby suppressing generation of a resistance layer such as a NiO phase. Furthermore, elution of nickel ions is also suppressed or reduced. Because the shell including graphene has flexibility and easily accommodates volume changes of the composite positive active material during charging and discharging, an occurrence of cracks inside the composite positive active material is suppressed or reduced. Because graphene has high electronic conductivity, interfacial resistance between the composite positive active material and the electrolyte is reduced. Accordingly, the internal resistance of the lithium battery is maintained or reduced despite the introduction of a shell including graphene. In some embodiments, because the first metal oxide has voltage resistance, it is possible to prevent or reduce deterioration of the lithium transition metal oxide included in the core during charging and discharging at a high voltage. As a result, cycle characteristics and high temperature stability of a lithium battery including the composite positive active material are improved. The shell may include, for example, a first metal oxide of one kind or first metal oxides of two or more different kinds. In some embodiments, in the composite positive active material, even though the lithium transition metal oxide has a high nickel content (e.g., amount) of 80 mol% or more, with respect to the total number of moles of the transition metals, high discharge capacity and cycle characteristics may be concurrently (e.g., simultaneously) provided due to the arrangement of the shell including the first metal oxide and graphene on the core. Therefore, the composite positive active material having a high nickel content (e.g., amount) of 80 mol% or more is capable of providing improved capacity compared to the composite positive active material having a relatively low nickel content (e.g., amount), while still providing excellent or suitable lifespan characteristics. The metal included in the first metal oxide may be, for example, at least one selected from Al, Nb, Mg, Sc, Ti, Zr, V, W, Mn, Fe, Co, Pd, Cu, Ag, Zn, Sb, and Se.

The first metal oxide may be, for example, at least one selected from $Al_2O_z(0<z<3)$, $NbO_x(0<x<2.5)$, $MgO_x(0<x<1)$, $Sc_2O_z(0<z<3)$, $TiO_y(0<y<2)$, $ZrO_y(0<y<2)$, $V_2O_z(0<z<3)$, $WO_y(0<y<2)$, $MnO_y(0<y<2)$, $Fe_2O_z(0<Z<3)$, $Co_3O_w(0<w<4)$, $PdO_x(0<x<1)$, $CuO_x(0<x<1)$, $AgO_x(0<x<1)$, $ZnO_x(0<x<1)$, $Sb_2O_z(0<z<3)$, and $SeO_y(0<y<2)$. By arranging the first metal oxide in the graphene matrix, uniformity of the shell arranged on the core is improved, and voltage resistance of the composite positive active material is further improved. For example, the shell includes $Al_2O_x$ $(0<x<3)$ as the first metal oxide. The shell may further include at least one kind of a second metal oxide represented by a formula $M_aO_c$ ($0<a\leq3$, $0<c\leq4$, when a is 1, 2, or 3, c is an integer). M is at least one metal selected from groups 2 to 13, 15 and 16 of the periodic table of elements. For example, the second metal oxide includes the same metal as the first metal oxide, and c/a, which is a ratio of c to a of the second metal oxide, has a greater value than b/a, which is a ratio of b to a of the first metal oxide. For example, c/a >b/a. The second metal oxide is, for example, selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide is a reduced product of the second metal oxide. A first metal oxide is obtained by reducing some or all of the second metal oxide. Accordingly, the first metal oxide has a lower oxygen content (e.g., amount) and a higher oxidation number of metal than the second metal oxide. For example, the shell includes $Al_2O_x$ $(0<x<3)$, as a first metal oxide, and $Al_2O_3$ as a second metal oxide. In a composite positive active material, for example, graphene included in the shell and the transition metal of lithium transition metal oxide included in the core are chemically bound through a chemical bonding. The carbon atom (C) of graphene included in the shell and the transition metal (Me) of the lithium transition metal oxide are chemically bound through, for example, a C-O-Me bond (for example, a C-O-Ni bond) via an oxygen atom. The core and the shell are complexed by a chemical bonding between graphene included in the shell and the lithium transition metal oxide included in the core through a chemical bonding. Thus, the composite positive active material is distinguished from a simple physical mixture of graphene and lithium transition metal oxide. In some embodiments, the first metal oxide and the graphene included in the shell are also chemically bound through a chemical bond. Here, the chemical bond is, for example, a covalent bond or an ionic bond. The covalent bond is, for example, a bond including at least one of an ester group, an ether group, a carbonyl group, an amide group, a carbonate anhydride group, and an acid anhydride group. The ionic bond is a bond including, for example, a carboxylate ion, an ammonium ion, an acyl cation group, and/or the like. A thickness of the shell is, for example, 1 nm to 5 $\mu$m, 1 nm to 1 $\mu$m, 1 nm to 500 nm, 1 nm to 200 nm, 1 nm to 100 nm, 1 nm to 90 nm, 1 nm to 80 nm, 1 nm to 70 nm, 1 nm to 60 nm, 1 nm to 50 nm, 1 nm to 40 nm, 1 nm to 30 nm, 1 nm to 20 nm, or 1 nm to 10 nm. An increase of internal resistance of the lithium battery included in the composite positive active material is suppressed or reduced by the shell having a thickness in this range.

A content (e.g., amount) of the composite included in the composite positive active material may be 3 wt% or less, 2 wt% or less, 1 wt% or less, 0.5 wt% or less, 0.2 wt% or less of the total weight of the composite positive active material. The content (e.g., amount) of the composite may be 0.01 wt% to 3 wt%, 0.01 wt% to 1 wt%, 0.01 wt% to 0.7 wt%, 0.01 wt% to 0.6 wt%, 0.1 wt% to 0.5 wt%, 0.01 wt % to 0.2 wt%, 0.01 wt% to 0.1 wt%, or 0.03 wt% to 0.07 wt% of the total weight of the composite positive active material. As the composite positive active material includes the composite in this range, cycle characteristics of the lithium battery including the composite positive active material are further improved. A particle diameter of at least one selected from the first metal oxide and the second metal oxide included in the composite may be 1 nm to 1 $\mu$m, 1 nm to 500 nm, 1 nm to 200 nm, 1 nm to 100 nm, 1 nm to 70 nm, 1 nm to 50 nm, 1 nm to 30 nm, 3 nm to 30 nm, 3 nm to 25 nm, 5 nm to 25 nm, 5 nm to 20 nm, or 7 nm to 20 nm. The first metal oxide and/or the second metal oxide may be more uniformly distributed in the graphene matrix of the composite by having a particle diameter within the nano range. Therefore, such a composite may be uniformly coated on the core without aggregation, to form a shell. In some embodiments, the first metal oxide and/or the second metal oxide may be more uniformly arranged on the core by having a particle diameter within this range. Accordingly, as the first metal oxide and/or the second metal oxide are uniformly arranged on the core, a voltage resistance characteristic may be more effectively exhibited. The particle diameter of the first metal oxide and/or the second metal oxide is, for example, an average particle diameter. Average particle diameters of the first metal oxide and the second metal oxide are measured by using, for example, a measuring device employing a laser diffraction method or a dynamic light scattering method. An average particle diameter is measured by using, for example, a laser scattering particle diameter distribution meter (for example, Horiba's LA-920), and is a value of a median particle diameter (D50) when 50 % is accumulated from the side of small particles in volume conversion.

The core included in the composite positive active material includes, for example, a lithium transition metal oxide represented by the following Formula 1:

$$\text{Formula 1} \qquad \text{Li}_a\text{Ni}_x\text{CO}_y\text{M}_z\text{O}_{2-b}\text{A}_b$$

wherein in Formula 1, $1.0 \leq a \leq 1.2$, $0 \leq b \leq 0.2$, $0.8 \leq x < 1$, $0 < y \leq 0.3$, $O < z \leq 0.3$, and $x+y+z=1$, M at least one selected from manganese (Mn), niobium (Nb) ), vanadium (V), magnesium (Mg), gallium (Ga), silicon (Si), tungsten (W), molybdenum (Mo), iron (Fe), chromium (Cr), copper (Cu), zinc (Zn) ), titanium (Ti), aluminum (Al), and boron (B), A is F, S, Cl, Br, or a combination thereof.

The core included in the composite positive active material includes, for example, a lithium transition metal oxide represented by the following Formulas 2 to 4:

$$\text{Formula 2} \qquad \text{LiNi}_x\text{Co}_y\text{Mn}_z\text{O}_2,$$

$$\text{Formula 3} \qquad \text{LiNi}_x\text{Co}_y\text{Al}_z\text{O}_2,$$

wherein in Formula 2 and Formula 3, $0.8 \leq x \leq 0.95$, $0 < y \leq 0.2$, $0 < z \leq 0.2$, and $x+y+z=1$,

$$\text{Formula 4} \qquad \text{LiNi}_x\text{Co}_y\text{Al}_v\text{Mn}_w\text{O}_2,$$

wherein in Formula 4, $0.8 \leq x \leq 0.95$, $0 < y \leq 0.2$, $0 < v \leq 0.2$, $0 < w \leq 0.2$, and $x+y+v+w=1$.

In some embodiments, the electrode including a dry electrode film is, for example, a negative electrode. The negative electrode includes a negative active material layer, and the negative active material layer includes a negative active material.

For the negative active material, any that may be utilized as a negative active material in the related art may be utilized. For example, the negative active material may include one or more selected from lithium metals, metals alloyable with lithium, transition metal oxides, non-transition metal oxides, and carbon-based materials. The metals alloyable with lithium may be, for example, Si, Sn, Al, Ge, Pb, Bi, Sb, and Si-Y alloy (Y may be an alkali metal, alkaline earth metal, group 13 element, group 14 element, transition metal, rare earth element, or a combination thereof, and is not Si), Sn-Y alloy (Y may be an alkali metal, alkaline earth metal, group 13 element, group 14 element, transition metal, rare earth element, or a combination thereof, and is not Sn), and/or the like. The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. The transition metal oxide is, for example, a lithium titanium oxide, a vanadium oxide, a lithium vanadium oxide, and/or the like. The non-transition metal oxides are, for example, $\text{SnO}_2$, $\text{SiO}_x$ ($0 < x < 2$), and/or the like. The carbon-based material is, for example, crystalline carbon, amorphous carbon, or mixtures thereof. The crystalline carbon is, for example, graphite, such as natural or artificial graphite, in an amorphous, plate-like, flake-like, spherical, or fibrous form. The amorphous carbon is, for example, soft carbon (carbon calcined at a low temperature) or hard carbon, mesophase pitch carbide, calcined coke, and/or the like.

A content (e.g., amount) of the negative active material included in the negative active material layer is, for example, 80 wt% to 98 wt%, or 90 wt% to 98 wt%, with respect to the total weight of the negative active material layer.

Referring to 4A, the electrode 300 according to an embodiment includes an electrode current collector 200 and an electrode active material layer 100 arranged on one surface of the electrode current collector 200, wherein the electrode active material layer 100 includes a first electrode active material, a second electrode active material, and a binder. The electrode 300 is, for example, a dry electrode. For example, the first electrode active material and the second electrode active material are dry electrode active materials, and the binder is a dry binder.

Referring to 4B, the electrode 300 according to an embodiment includes an electrode current collector 200 and electrode active material layers 100 arranged on both (e.g., opposite) surfaces of the electrode current collector 200, wherein the electrode active material layers 100 include a first electrode active material, a second electrode active material, and a binder. The electrode 300 is, for example, a dry electrode. For example, the first electrode active material and the second electrode active material are dry electrode active materials, and the binder is a dry binder.

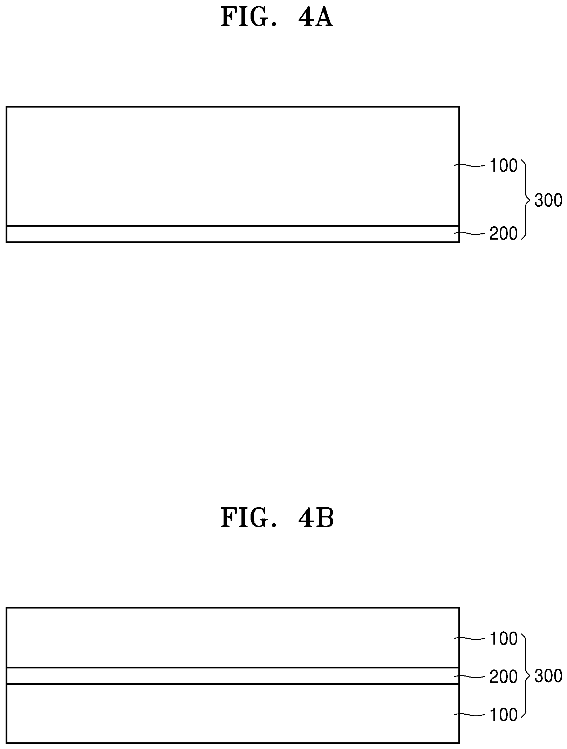

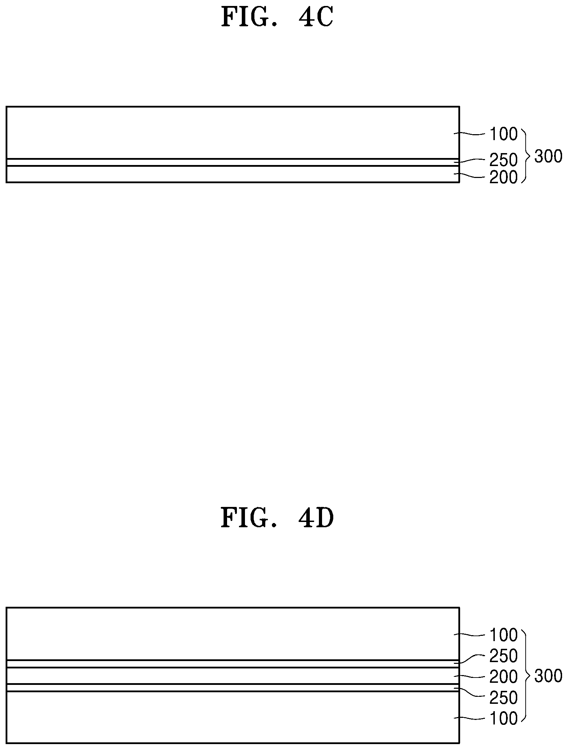

Referring to 4C, the electrode 300 according to an embodiment includes an electrode current collector 200, an electrode active material layer 100 arranged on one surface of the electrode current collector 200, and a coating layer 250 arranged between the electrode active material layer 100 and the electrode current collector 200, wherein the electrode active material layer 100 includes a first electrode active material, a second electrode active material, and a binder. The electrode of FIG. 4C has the same configuration as the electrode of FIG. 4A except that the coating layer 250 is additionally included. As the electrode 300 further includes the coating layer 250, binding force between the electrode active material layer 100 and the electrode current collector 200 may be improved.

Referring to 4D, the electrode 300 according to an embodiment includes an electrode current collector 200, electrode active material layers 100 arranged on both (e.g., opposite) surfaces of the electrode current collector 200, and coating layers 250 arranged between the electrode active material layers 100 and the electrode current collector 200, wherein the electrode active material layers 100 include a first electrode active material, a second electrode active material, and a binder. The electrode of FIG. 4D has the same configuration as the electrode of FIG. 4B except that the coating layers 250 are additionally included. As the electrode 300 further includes the coating layers 250, the binding force between the electrode active material layer 100 and the electrode current collector 200 may be improved.

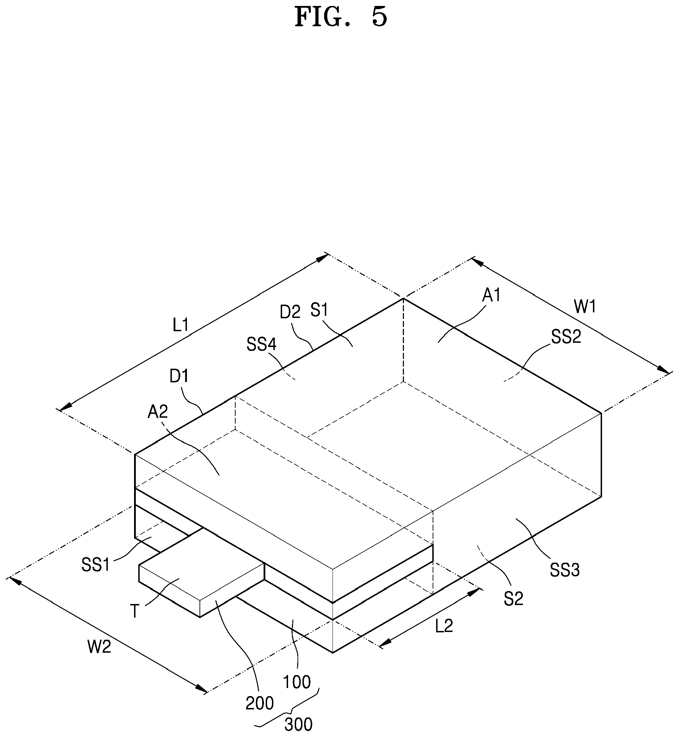

Referring to FIG. 5, in the electrode 300 according to an embodiment, the electrode active material layer 100 includes: a first surface S1; a second surface S2 opposing the first surface; a first side surface SS1 connected to longitudinal ends of the first surface S1 and the second surface S2; a second side surface SS2 opposing the first side surface; a third side surface SS3 connected to widthwise ends of the the first surface S1 and the second surface S2; and a fourth side surface SS4 opposing the third side surface. A first region D1 is defined by a first surface S1, a second surface S2, a third side surface SS3, and a fourth side surface SS4, and includes the electrode current collector 200 arranged between the first surface S1 and the second surface S2. A second region D2 is defined by a first surface S1, a second surface S2, a third side surface SS3, and a fourth side surface SS4, and is free of an electrode current collector 200 between the first surface S1 and the second surface S2.

Referring to FIG. 5, the electrode active material layer 100 has a first area A1 defined by a first distance in a longitudinal direction L1 and a first distance in a width direction W1, the electrode current collector 200 is arranged between the first surface S1 and the second surface S2, and the electrode current collector 200 has a second area A2 defined by a second distance in a longitudinal direction L2 and a second distance in a width direction W2, wherein the second area A2 of the electrode current collector 200 is 90 % or less of the first area A1 of the electrode active material layer 100. For example, the second area A2 of the electrode current collector 200 is 10 % to 90 %, 10 % to 80 %, 10 % to 70 %, 10 % to 60 %, 10 % to 50 %, 10 % to 40 %, 10 % to 30 %, or 10 % to 20 % of the first area A1 of the electrode active material layer 100. As the area of the electrode current collector 200 in the electrode 300 is smaller than that of the electrode active material layer 100, the energy density of the lithium battery 1000 including the electrode 300 is further improved.

Referring to FIG. 5, the second distance in a longitudinal direction L2 of the electrode current collector 200 is 90 % or less of the first distance in a longitudinal direction L1 of the electrode active material layer 100. For example, the second distance in a longitudinal direction L2 of the electrode current collector 200 is 10 % to 90%, 10% to 80%, 10% to 70%, 10% to 60%, 10% to 50%, 10% to 40%, 10% to 30 %, or 10 % to 20 % of the first distance in a longitudinal direction L1 of the electrode active material layer 100. In some embodiments, the second distance in a width direction W2 of the electrode current collector 200 is 90 % or less of the first distance in a width direction of the electrode active material layer 100. For example, the second distance in a width direction W2 of the electrode current collector 200 is 10 % to 90%, 10% to 80%, 10% to 70%, 10% to 60%, 10% to 50%, 10% to 40%, 10 % to 30 %, or 10 % to 20 % of the first distance in a width direction W1 of the electrode active material layer 100. For example, the second distance in a longitudinal direction L2 of the electrode current collector 200 is 900 % or less of the first distance in a longitudinal direction L1 of the electrode active material layer 100, and the second distance in a width direction W2 of the electrode current collector 200 is 90 % or less of the first distance in a width direction W1 of the electrode active material layer 100. As the electrode current collector 200 has such a size, the energy density of the lithium battery 1000 including the electrode 300 is further improved.

Referring to FIG. 5, the electrode current collector 200 is exposed on three or less side surfaces selected from the first side surface SS1, the second side surface SS2, the third side surface SS3, and the fourth side surface SS4 included in the electrode active material layer 100. As the electrode current collector 200 has a smaller area than the electrode active material layer 100, the electrode current collector 200 is exposed on some of the side surfaces included in the electrode active material layer 100, for example, three, two, or one side surface. As the number of side surfaces of the electrode active material layer 100 on which the electrode current collector 200 is exposed is reduced, possibility of generation of a short circuit through the side surface of the electrode active material layer 100 is reduced, and thus, safety of the lithium battery 1000 is improved.

Referring to FIG. 5, the electrode current collector 200 further includes a tab T extending to the outside of the electrode active material layer 100 through two or less sides selected from the first side surface SS1, the second side surface SS2, the third side surface SS3 and the fourth side surface SS4. For example, the tab T extends to the outside of the electrode active material layer 100 through the first side surface SS1 and/or the second side surface SS2. In some embodiments, the tab T extends to the outside of the electrode active material layer 100 through the third side surface SS3 and/or the fourth side surface SS4. As the tab T extends to the outside of the electrode active material layer 100 through one side or two sides opposing each other, a short circuit caused by a plurality of adjacent tabs T may be prevented or reduced.

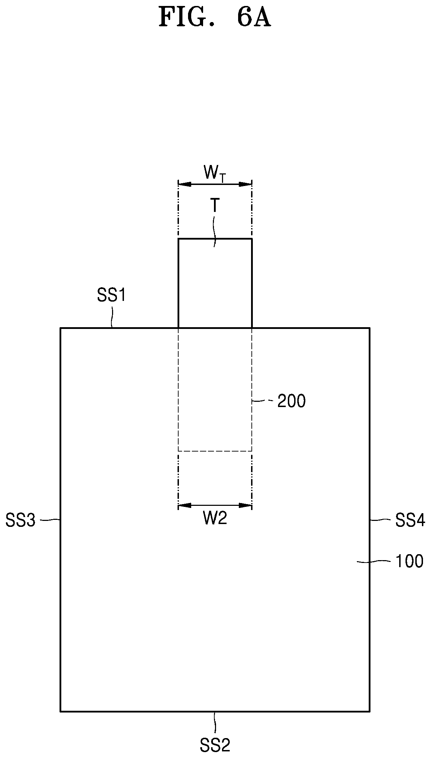

Referring to FIGS. 6A to 6F, the electrode current collector 200 arranged on a portion between both (e.g., opposite) surfaces of the electrode active material layer 100 has one or more suitable shapes and may be arranged at one or more suitable positions within the electrode active material layer 100. In FIGS. 6A to 6F, in the electrode active material layer 100 defined by the first side surface SS1, the second side surface SS2, the third side surface SS3, and the fourth side surface SS4, the area where the electrode current collector 200 is arranged corresponds to the first area, and the area where the electrode current collector 200 is not arranged corresponds to the second area.

Referring to FIG. 6A, the electrode current collector 200 is arranged in a portion of the electrode active material layer 100 defined by the first side surface SS1, the second side surface SS2, the third side surface SS3, and the fourth side surface SS4. The electrode current collector 200 is exposed on the first side surface SS1 of the electrode active material layer 100 and includes a tab T extending to the outside of the electrode active material layer 100 through the first side surface SS1. The distance in a width direction of the tab $W_T$ is 100 % of the second distance in a width direction W2 of the electrode current collector 200.

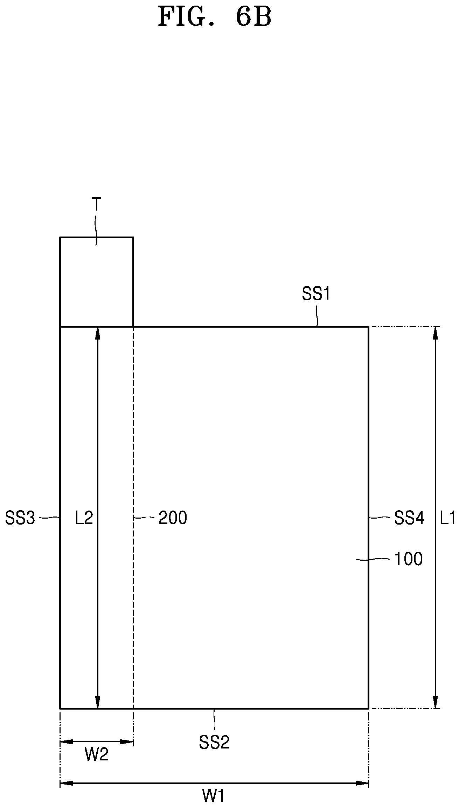

Referring to FIG. 6B, the electrode current collector 200 is arranged in a portion of the electrode active material layer 100 defined by the first side surface SS1, the second side surface SS2, the third side surface SS3, and the fourth side surface SS4. The electrode current collector 200 is exposed on the first side surface SS1, the second side surface SS2, and the third side surface SS3 of the electrode active material layer 100, and includes a tab T extending out of the electrode active material layer 100 through the first side surface SS1. The second distance in a longitudinal direction L2 of the electrode current collector 200 is 100 % of the first distance in a longitudinal direction L1 of the electrode active material layer 100. The second distance in a width direction W2 of the electrode current collector 200 is less than 100 % of the first distance in a width direction W1 of the electrode active material layer 100.

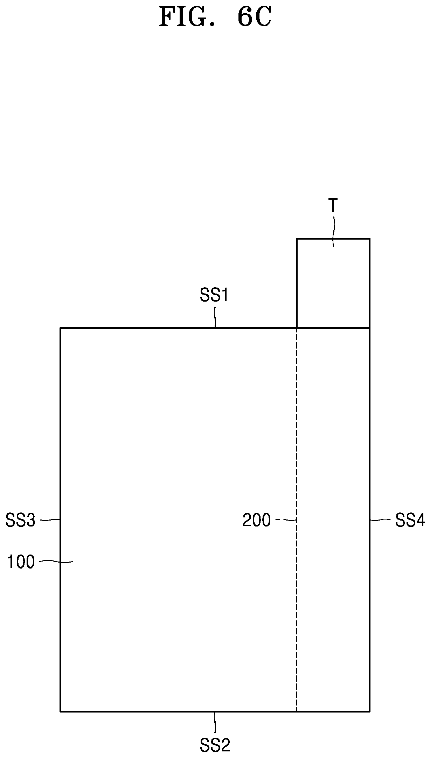

Referring to FIG. 6C, the electrode current collector 200 is arranged in a portion of the electrode active material layer 100 defined by the first side surface SS1, the second side surface SS2, the third side surface SS3, and the fourth side surface SS4. The electrode current collector 200 is exposed on the first side surface SS1, the second side surface SS2, and the fourth side surface SS4 of the electrode active material layer 100, and includes a tab T extending out of the electrode active material layer 100 through the first side surface SS1.

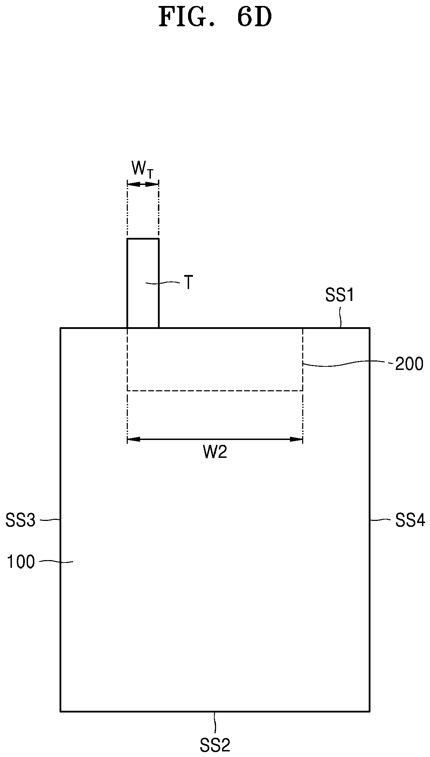

Referring to FIG. 6D, the electrode current collector 200 is arranged in a portion of the electrode active material layer 100 defined by the first side surface SS1, the second side surface SS2, the third side surface SS3, and the fourth side surface SS4. The electrode current collector 200 is exposed on the first side surface SS1 of the electrode active material layer 100 and includes a tab T extending to the outside of the electrode active material layer 100 through the first side surface SS1. The distance in a width direction of the tab $W_T$ is less than 100 % of the second distance in a width direction W2 of the electrode current collector 200.

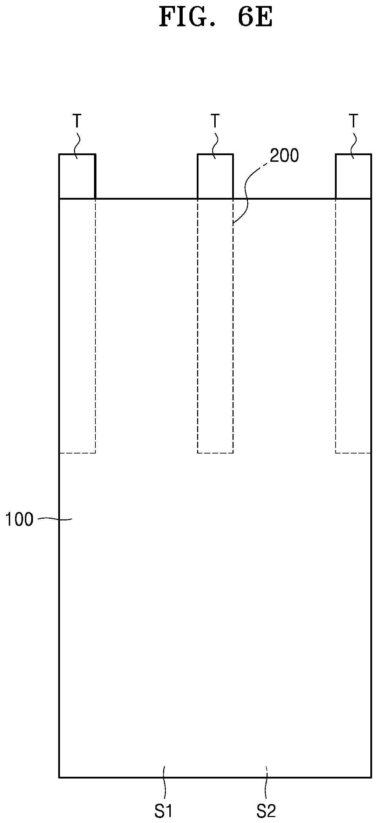

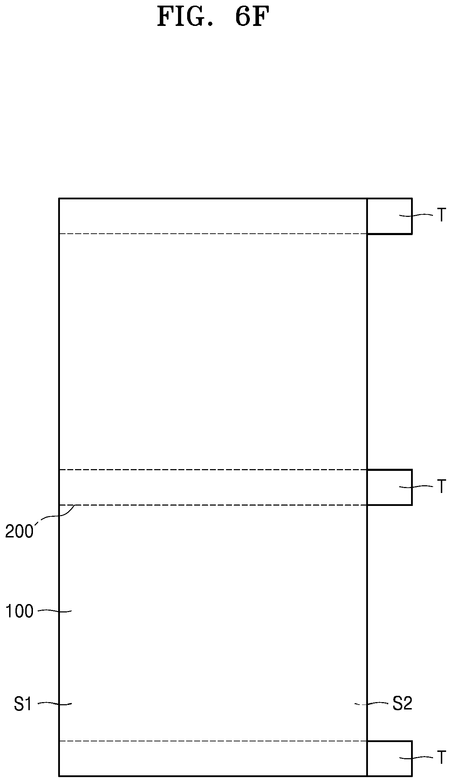

Referring to FIGS. 6E and 6F, the plurality of electrode current collectors 200 are arranged in a portion of the electrode active material layer 100 defined by the first side surface SS1, the second side surface SS2, the third side surface SS3, and the fourth side surface SS4. The electrode active material layer 100 includes a plurality of electrode current collectors 200 spaced apart along the longitudinal direction or the width direction. The plurality of current collectors 200 are, for example, spaced apart at the same interval or spaced apart at intervals different from each other. The plurality of electrode current collectors 200 forms an angle of 45 degrees or less, 40 degrees or less, 30 degrees or less, 25 degrees or less, 20 degrees or less, 15 degrees or less, 10 degrees or less, or 5 degrees or less, with one surface of the electrode active material layer 100, for example, at least one of the first surface S1 and the second surface S2. For example, the plurality of current collectors 200 forms an angle of 0 degrees, that is, is arranged in parallel with one surface of the electrode active material layer 100. The plurality of electrode current collectors 200 is arranged between, for example, the first surface S1 and the second surface S2 of the electrode active material layer 100.

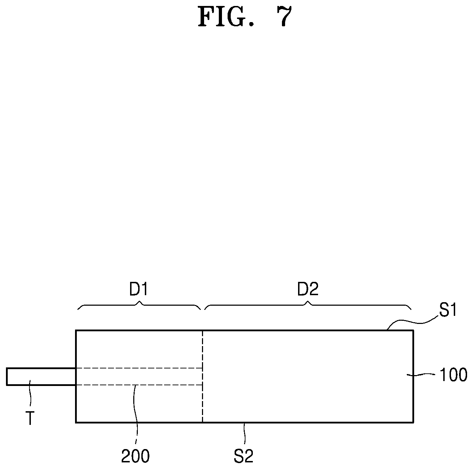

Referring to FIG. 7, the electrode active material layer 100 includes a first region D1 in which the electrode current collector 200 is arranged between the first surface S1 and the second surface S2; and a second region D2 in which the electrode current collector 200 is not arranged between the first surface S1 and the second surface S2. A mixture density of the electrode active material layer 100 included in the second region D2 is less than 99 %, e.g., 98 % or less, 97 % or less, 96 % or less, 95 % or less, or 90 % or less of the mixture density of the electrode active material layer 100 included by the first region D1. For example, the mixture density of the electrode active material layer 100 included in the second region D2 is 50 % to less than 99 %, 60 % to 98 %, 70 % to 97 %, 80 % to 96 %, or 90 % to 95 % of the mixture density of the electrode active material layer 100 included by the first region D1.

A lithium battery according to another embodiment includes a positive electrode; a negative electrode; and an electrolyte arranged between the positive electrode and the negative electrode, wherein at least one of the positive electrode and the negative electrode is the above-described electrode.

As the lithium battery includes at least one of the positive electrode and the negative electrode including the dry electrode film described above, cycle characteristics of the lithium battery are improved.

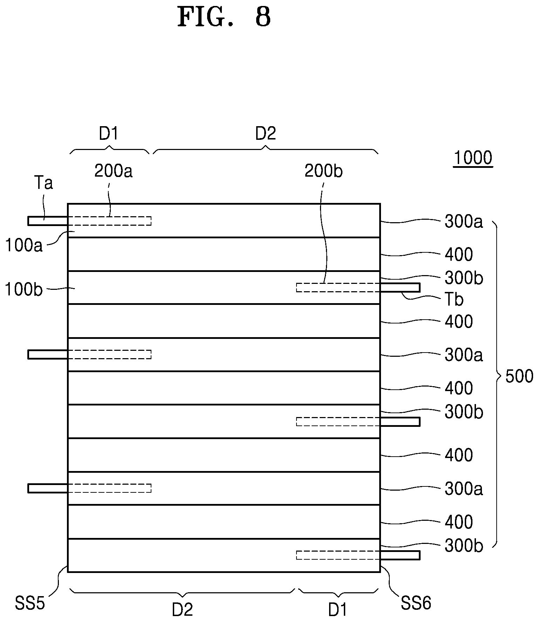

Referring to FIGS. 8 to 10, the lithium battery 1000 includes a positive electrode 300a; a negative electrode 300b; and an electrolyte 400 arranged between the positive electrode 300a and the negative electrode 300b, wherein at least one of the positive electrode 300a and the negative electrode 300b is the above-described electrode. The lithium battery 1000 includes an electrode assembly 500.

Referring to FIG. 8, the electrode assembly 500 includes a plurality of positive electrodes 300a stacked along a thickness direction; a plurality of negative electrodes 300b each arranged between the plurality of positive electrodes 300a; and a plurality of electrolytes 400 each arranged between the plurality of positive electrodes (300a) and negative electrodes (300b). The positive electrode 300a includes a positive current collector 200a, and the positive current collector 200a includes a positive electrode tab Ta extending to the outside of the positive active material layer 100a through one side SS5 of the electrode assembly 500, and the negative current collector 200b includes a negative electrode tab Tb extending to the outside of the negative active material layer 100b through the other side SS6 opposing one side SS5 of the electrode assembly 500. The lithium battery 1000 includes an electrode assembly 500. As the positive electrode tab Ta and the negative electrode tab Tb are arranged on side surfaces opposite one another, the possibility of a short circuit therebetween is reduced.

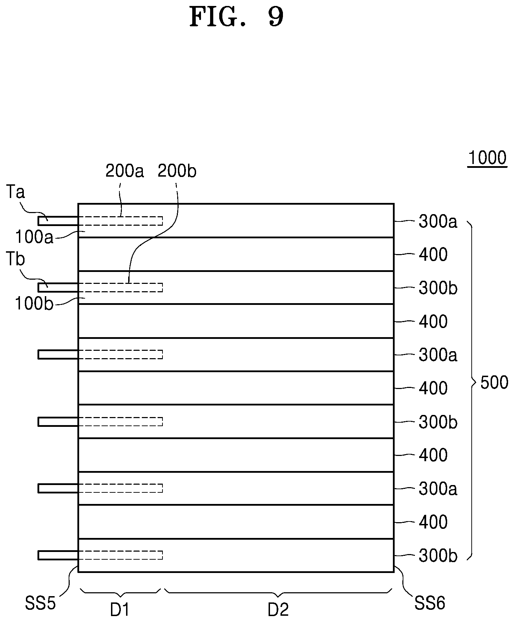

Referring to FIG. 9, the electrode assembly 500 includes a plurality of positive electrodes 300a stacked along a thickness direction; a plurality of negative electrodes 300b each arranged between the plurality of positive electrodes 300a; and a plurality of electrolytes 400 each arranged between the plurality of positive electrodes (300a) and negative electrodes (300b). The positive electrode 300a includes a positive current collector 200a, and the positive current collector 200a includes a positive electrode tab Ta extending to the outside of the positive active material layer 100a through one side SS5 of the electrode assembly 500, and the negative current collector 200b includes a negative electrode tab Tb extending to the outside of the negative active material layer 100b through the same side SS5 of the electrode assembly 500. The lithium battery 1000 includes an electrode assembly 500.

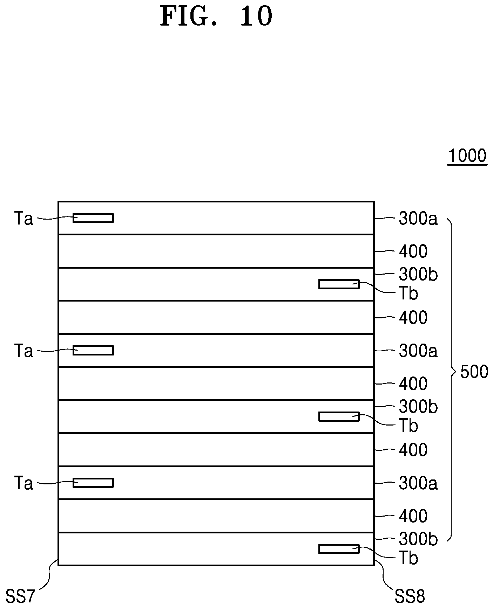

Referring to FIG. 10, a plurality of positive electrode tabs Ta is arranged on one side surface SS5 spaced apart at regular intervals in a thickness direction, and a plurality of negative electrode tabs Tb are arranged are arranged spaced apart at regular intervals in a thickness direction. The plurality of positive electrode tabs Ta are arranged adjacent to one side surface SS7 in a width direction of the electrode assembly 500, and the plurality of negative electrode tabs Tb are arranged adjacent to the other side surface SS8 in a width direction of the electrode assembly 500. FIG. 10 is a front view of one side surface SS5 of FIG. 9. The lithium battery 1000 includes an electrode assembly 500.

Although the positive electrode tabs Ta and the negative electrode tabs Tb are arranged on the same side surface, because they are arranged to be spaced apart from each other in a width direction, the possibility of a short circuit therebetween is reduced.

The lithium battery 1000 is, for example, a lithium primary battery or a lithium secondary battery. The lithium battery 1000 is, for example, a lithium ion battery, a lithium solid battery, and a lithium air battery.

The electrolyte included in the lithium battery 1000 is, for example, a liquid electrolyte or a solid electrolyte. The solid electrolyte is, for example, an oxide-based solid electrolyte, or a sulfide-based solid electrolyte.

According to one embodiment the electrolyte (400) is a liquid electrolyte or a solid electrolyte.

A method of preparing a dry electrode film according to another embodiment is provided.

A method of preparing a dry electrode film includes: preparing a dry mixture by dry mixing a dry electrode active material, and a dry binder; and forming a dry electrode film from the dry mixture; wherein the dry electrode film includes a dry electrode active material and a dry binder, the dry electrode active material includes a first electrode active material and a second electrode active material, a ratio (d1/d2) of the particle diameter of the first electrode active material to the particle diameter of the second electrode active material is at least 1 and a most 5 (e.g., more than 1 and less than 5), and the dry electrode film is a free-standing film.

As the dry electrode film produced by this preparation method includes a first electrode active material and a second electrode active material, and the particle diameter of the first electrode active material and the particle diameter of the second electrode active material have a particle diameter ratio in this range, aggregation of the first positive active material in the dry electrode film is effectively suppressed or reduced, dispersibility of the first positive active material and the binder is improved, and uniformity of binding of the first positive active material and the binder is improved, and therefore, overall mechanical strength of the dry positive electrode film is improved. In some embodiments, in charge/discharge processes of a lithium battery having an electrode including such a dry electrode film, local deterioration due to a volume change of the dry positive electrode film is suppressed or reduced. As a result, cycle characteristics of the lithium battery including the dry positive electrode film are improved.

First, a dry mixture is prepared by dry mixing a dry electrode active material and a dry binder. The dry electrode active material includes a first electrode active material and a second electrode active material. For details on the first electrode active material and the second electrode active material, refer to the dry electrode film section. Dry mixing refers to mixing without utilizing a process solvent. The process solvent is, for example, a solvent utilized for preparing electrode slurry. The process solvent is, for example, water, NMP, etc., but is not limited thereto, and is not limited as long as it is a process solvent utilized for preparing electrode slurry. The dry mixing may be carried out, for example, at a temperature of 25 °C to 65 °C, by utilizing a stirrer. The dry mixing may be performed by utilizing a stirrer, for example, at a rotation speed of 10 rpm to 10,000 rpm, or 100 rpm to 1,000 rpm. The dry mixing may be performed by utilizing a stirrer, for example, for 1 minute to 200 minutes, or 1 minute to 150 minutes. The first electrode active material and the second electrode active material are also dry electrode active materials.

The dry mixture may further include a dry conductive material. By further including the dry conductive material, internal resistance of the dry electrode film may be reduced.

The dry mixing may be performed, for example, at least once. First, a first dry mixture may be prepared by primarily dry mixing the dry electrode active material, the dry conductive material, and the dry binder. The primary dry mixing may be performed, for example, at a temperature of 25 °C to 65 °C, at a rotation speed of 2,000 rpm or less, for 15 minutes or less. The primary dry mixing may be performed, for example, at a temperature of 25 °C to 65 °C, at a rotation speed of 500 rpm to 2,000 rpm, for 5 minutes to 15 minutes. The dry electrode active material, the dry conductive material, and the dry binder may be uniformly mixed by the primary dry mixing. Then, a second mixture may be prepared by secondarily dry mixing the electrode active material, the dry conductive material, and the dry binder. The secondary dry mixing may be performed, for example, at a temperature of 25 °C to 65 °C, at a rotation speed of 4,000 rpm or more, for 10 minutes or more. The secondary dry mixing may be performed, for example, at a temperature of 25 °C to 65 °C, at a rotation speed of 4,000 rpm to 9,000 rpm, for 10 minutes to 60 minutes. A dry mixture including a fibrillized dry binder may be obtained by the secondary dry mixing.

The stirrer is, for example, a kneader. The stirrer may include, for example, a chamber; one or more rotating shafts arranged inside the chamber to rotate; and a blade, which is bound to the rotation shaft to be rotatable, and arranged in a longitudinal direction of the rotation shaft. The blade may be, for example, one or more selected from among a ribbon blade, a sigma blade, a Z blade, a dispersion blade, and/or a screw blade. By including the blade, it is possible to prepare a dough-like mixture by effectively mixing the electrode active material, the dry conductive material, and the dry binder without a solvent.

The dry conductive material includes carbon black, graphite fine particles, natural graphite, artificial graphite, acetylene black, ketjen black, and/or carbon fiber; carbon nanotube(s); metal powder, metal fiber and/or metal tube of copper, nickel, aluminum, and/or silver; conductive polymer(s) such as polyphenylene derivative(s), but is not limited thereto, and any conductive material utilized in the art may be utilized. The conductive material is, for example, a carbon-based conductive material.

As a dry binder, vinylidene fluoride/hexafluoropropylene copolymer, polyvinylidene fluoride, polyacrylonitrile, polymethylmethacrylate, polytetrafluoroethylene (PTFE), one or more mixtures of the aforementioned polymers, styrene butadiene rubber-based polymer and/or the like may be utilized, but a dry binder is not necessarily limited thereto, and any utilized or suitable in the art may be utilized.

It is also possible to additionally form pores inside the dry electrode film by further adding a plasticizer or a pore former to the dry mixture.

A content (e.g., amount) of the dry electrode active material, the dry conductive material, and the dry binder utilized in the dry mixture is as described above in the electrode section.

The positive electrode uses a positive active material as an electrode active material. For the positive active material, refer to the electrode section described above. The negative electrode uses a negative active material as an electrode active material. For the negative active material, refer to the electrode section described above.

Next, a dry electrode film is formed from the dry mixture.

The dry electrode film may be formed, for example, by putting the prepared dry mixture into an extrusion device and extruding.

The dry electrode film may be extruded in a form of a sheet. A pressure at the time of extrusion may be, for example, 4 MPa to 100 MPa, or 10 MPa to 90 MPa. The dry electrode film may be a self-standing film.

In some embodiments, the dry electrode film may be formed by, for example, injecting the prepared dry mixture into an extrusion apparatus and extruding, and additionally roll-pressing the dry extrudate in the form of an extruded sheet.

Other pressing method such as a flat-pressing and/or the like may be utilized instead of the roll-pressing, but other pressing method is not necessarily limited thereto. Pressure at the time of roll-pressing is, for example, 0.1 ton/cm$^2$ to 10.0 ton/cm$^2$. When the pressure during roll-pressing is excessively increased, cracks may be generated in the dry electrode film. When the pressure during roll-pressing is excessively decreased, a mixture density of the dry electrode film may be lowered.

A method of preparing an electrode according to another embodiment is provided.

The method of preparing an electrode includes providing a current collector; and providing a dry electrode film on one or both (e.g., opposite) surface(s) of the current collector.

First, an electrode current collector is provided.

The electrode current collector may additionally include a coating layer arranged on one or both (e.g., opposite) surface(s) of the electrode current collector. The providing of the electrode current collector may further include, for example, arranging a coating layer on one or both (e.g., opposite) surface(s) of the electrode current collector. For materials of the electrode current collector, refer to the electrode current collector section described above. The positive current collector is, for example, aluminum foil. The negative current collector is, for example, copper foil. The arranging a coating layer on one or both (e.g., opposite) surface(s) of the electrode current collector is arranging the coating layer on one or both (e.g., opposite) surface(s) or side(s) of the electrode current collector by a dry or wet method. For a specific coating method, refer to the above-described section about the electrode current collector including a coating layer.

Next, an electrode is prepared by arranging the dry electrode film on one or both (e.g., opposite) surface(s) of the electrode current collector. For example, an electrode may be manufactured by laminating a dry electrode film on an electrode current collector.

The electrode prepared by the above-described method of preparing an electrode includes an electrode current collector; and an electrode active material layer arranged on one or both (e.g., opposite) surface(s) of the electrode current collector, wherein the electrode active material layer includes the above-described dry electrode film.

A lithium battery is manufactured by, for example, the following example method, but a preparation method is not necessarily limited to this method and varies depending on required conditions.

First, both the positive electrode and the negative electrode may be manufactured according to the above-described method of preparing a dry electrode film and an electrode. In some embodiments, one electrode of the positive electrode and the negative electrode may be manufactured by the dry preparation method described above, and the other electrode may be manufactured by a wet preparation method. For example, the other electrode may be prepared by preparing electrode slurry including an electrode active material, a conductive material, a binder, and a solvent, coating the prepared electrode slurry on an electrode current collector, and drying the electrode slurry. The conductive material and binder included in the electrode prepared by a wet method may be selected from the conductive materials and binders utilized in the above-described preparation of a dry electrode.

Next, a separator to be inserted between the positive electrode and the negative electrode is prepared.

For the separator, all that are utilized in a lithium battery in the art may be utilized. For the separator, for example, a separator having low resistance to ion movement of the electrolyte and an excellent or suitable impregnation ability to contain the electrolyte is utilized. The separator may be, for example, selected from glass fiber, polyester, Teflon, polyethylene, polypropylene, polytetrafluoroethylene (PTFE), or combination(s) thereof, and may be in a form of a nonwoven or woven fabric. For example, a winding separator such as polyethylene, polypropylene, and/or the like may be utilized in a lithium ion cell, and a separator having an excellent or suitable impregnation ability of an organic electrolyte solution may be utilized in a lithium ion polymer cell.

The separator is prepared by, for example, the following example method, but a manufacturing method is not necessarily limited thereto, and is adjusted according to required conditions.

First, a separator composition is prepared by mixing a polymer resin, a filler, and a solvent. The separator composition is directly coated on the electrode and dried to form a separator. In some embodiments, after the separator composition is casted and dried on a support, a separator film peeled from the support is stacked on an electrode to form a separator.

The polymer utilized for manufacturing the separator is not particularly limited, and any polymer utilized for the binder of the electrode plate may be utilized. For example, vinylidene fluoride/hexafluoropropylene copolymer, polyvinylidene fluoride (PVDF), polyacrylonitrile, polymethyl methacrylate, or a mixture thereof, may be utilized.

Next, the electrolyte is prepared.

The electrolyte is, for example, an organic electrolyte. The organic electrolyte is prepared by, for example, dissolving a lithium salt in an organic solvent.

For the organic solvent, all that may be utilized as an organic solvent in the art may be utilized. The organic solvent may be, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, N,N-dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

For the lithium salts, all that may be utilized as lithium salts in the art may be utilized. The lithium salts may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (each of x and y are natural numbers from 1 to 20), LiCl, LiI, or a mixture thereof.

In some embodiments, the electrolyte is a solid electrolyte. The electrolyte may be, for example, boron oxide, lithium oxynitride, and/or the like, but is not limited thereto, and all that may be utilized as a solid electrolyte in the related art may be utilized. The solid electrolyte is formed on the negative electrode by, for example, sputtering, or a separate solid electrolyte sheet is stacked on the negative electrode. The solid electrolyte is, for example, an oxide-based solid electrolyte or a sulfide-based solid electrolyte.

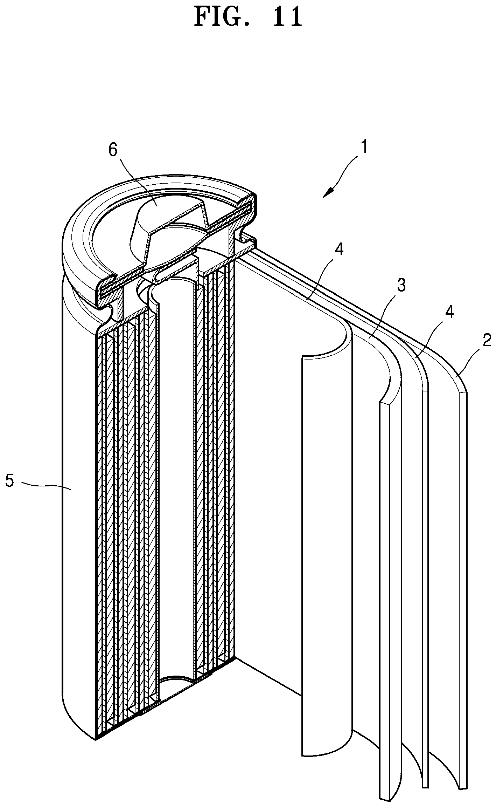

Referring to FIG. 11, a lithium battery 1 according to an embodiment includes a positive electrode 3, a negative electrode 2, and a separator 4. The positive electrode 3, the negative electrode 2, and the separator 4 are wound or folded to form the battery structure 7. The formed battery structure 7 is accommodated in the battery case 5. An organic electrolyte is injected into the battery case 5 and the battery case is sealed with a cap assembly to complete the lithium battery 1. The battery case 5 may be a cylindrical type or kind, but is not necessarily limited to such a shape and may be, for example, a prismatic type or kind, thin film type or kind, and/or the like.

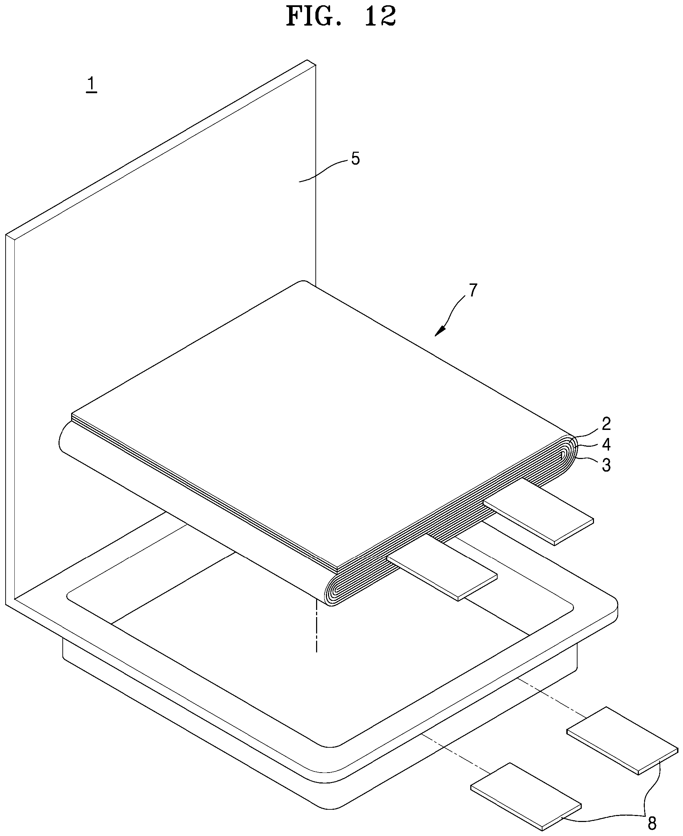

Referring to FIG. 12, a lithium battery 1 according to an embodiment includes a positive electrode 3, a negative electrode 2, and a separator 4. A separator 4 is arranged between the positive electrode 3 and the negative electrode 2, and the positive electrode 3, the negative electrode 2, and the separator 4 are wound or folded to form the battery structure 7. The formed battery structure 7 is accommodated in the battery case 5. An electrode tab 8 serving as an electrical path for inducing the current formed in the battery structure 7 to the outside may be included. An organic electrolyte is injected into the battery case 5 and the battery case is sealed to complete the lithium battery 1. The battery case 5 may be a prismatic type or kind, but is not necessarily limited to such a shape and may be, for example, a cylindrical type or kind, thin film type or kind, and/or the like.

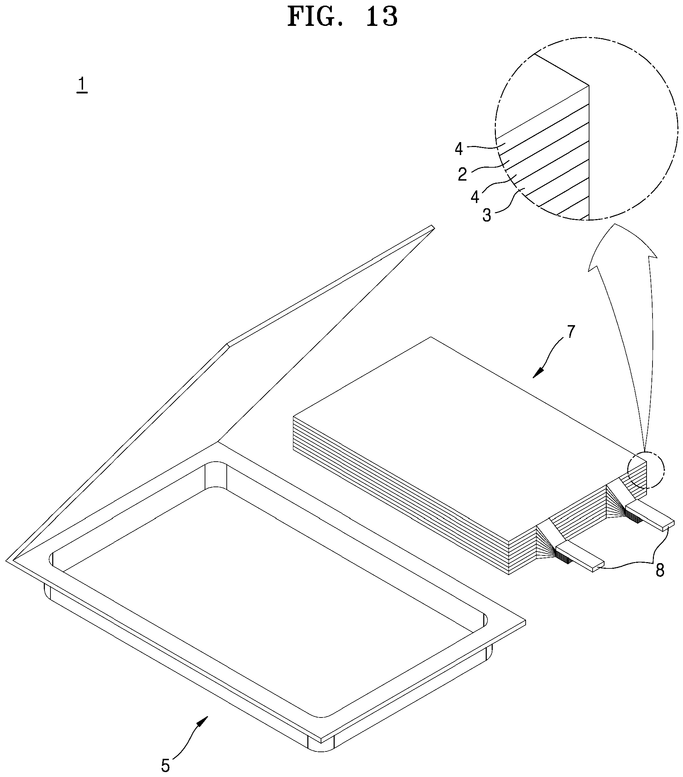

Referring to FIG. 13, a lithium battery 1 according to an embodiment includes a positive electrode 3, a negative electrode 2, and a separator 4. The separator 4 is arranged between the positive electrode 3 and the negative electrode 2 to form a battery structure. The battery structure 7 is stacked in a bi-cell structure, and then accommodated in a battery case 5. An electrode tab 8 serving as an electrical path for inducing the current formed in the battery structure 7 to the outside may be included. An organic electrolyte is injected into the battery case 5 and sealed to complete the lithium battery 1. The battery case 5 may be a prismatic type or kind, but is not necessarily limited to such a shape and may be, for example, a cylindrical type or kind, thin film type or kind, and/or the like.

A pouch-type or kind lithium battery corresponds to a lithium battery of FIGS. 11 to 13 which uses a pouch as a battery case. The pouch-type or kind lithium battery includes one or more battery structures. A separator may be arranged between a positive electrode and a negative electrode to form the battery structure. After the battery structures are stacked in a bi-cell structure, the battery structures are impregnated in an organic electrolyte, and accommodated and sealed in a pouch to complete a pouch-type or kind lithium battery. For example, although not shown in the drawings, the above-described positive electrode, negative electrode, and separator may be simply stacked and accommodated in a pouch in a form of an electrode assembly, or wound or folded into an electrode assembly in a form of a jelly roll and then accommodated in the pouch. Then, an organic electrolyte is injected into the pouch and the pouch is sealed to complete the lithium battery.

Because the lithium battery is excellent or suitable in lifespan characteristics and high-rate characteristics, the lithium battery may be utilized in electrical vehicles (EV). For example, the lithium battery may be utilized in a hybrid vehicle such as plug-in hybrid electric vehicle (PHEV). Furthermore, the lithium battery may be utilized in a field in which a large amount of power storage is required. For example, the lithium battery is utilized in electric bicycles, power tools, and/or the like.

A plurality of lithium batteries is stacked to form a battery module, and a plurality of battery modules forms a battery pack. Such a battery pack may be utilized in any device requiring high capacity and high output. For example, the battery pack may be utilized in a laptop, a smartphone, an electric vehicle, and/or the like. The battery module includes, for example, a plurality of batteries and a frame for holding them. The battery pack includes, for example, a plurality of battery modules and a bus bar connecting them. The battery module and/or battery pack may further include a cooling device. A plurality of battery packs is controlled by a battery management system. The battery management system includes a battery pack and a battery control device connected to the battery pack.

The present disclosure will be described in more detail through the following examples and comparative examples. However, the examples are provided to illustrate the present disclosure, and the scope of the present disclosure is not limited thereto.

**Preparation of lithium battery (half cell)**

Example 1: Dry positive electrode, bimodal positive active material, ratio of particle diameters of large diameter: small diameter positive active materials 4:1

**Preparation of positive electrode film self-standing film**

Large-diameter $LiNi_{0.896}Co_{0.072}Mn_{0.032}O_2$ (hereinafter referred to as large-diameter NCM) having an average particle diameter (D50) of 14 $\mu$m as a first positive active material, and small-diameter $LiNi_{0.896}Co_{0.072}Mn_{0.032}O_2$ (hereinafter referred to as small-diameter NCM) having an average particle diameter (D50) of 3.5 $\mu$m as a second positive active material, a carbon conductive material (Denka Black) as a dry conductive material, and polytetrafluoroethylene (PTFE) as a dry binder were put in a blade mixer in a weight ratio of 71:25:2:2, and then a first mixture was prepared by uniformly mixing the positive active material, the conductive material, and the binder in a primary dry mixing at 25 °C at a speed of 900 rpm for 12 minutes. Subsequently, in order to allow fiberization of the binder to proceed adequately, the first mixture was further mixed in a secondary mixing at 25 °C, at a speed of 5,000 rpm for 20 minutes, to prepare a second mixture. A separate solvent was not utilized in preparing the first mixture and the second mixture. The prepared second mixture was put into an extruder and extruded to prepare a positive electrode sheet. The pressure at the time of extrusion was 45 MPa. A dry positive electrode film was prepared by roll-pressing the prepared positive electrode sheet. The dry positive electrode film was a self-standing film without a support.

The pressure at the time of roll-pressing was 4.5 ton/cm². The first positive active material and the second positive active material were also dry positive active materials. The dry positive active materials showed a bimodal particle diameter distribution in the particle diameter distribution.

FIG. 1 is a scanning electron microscope image of a surface of a dry positive electrode film prepared in Example 1. It was confirmed that the first positive active material was dispersed and arranged without forming an aggregate by aggregating in the positive electrode film, on the surface of the dry positive electrode film.

**Preparation of positive electrode**

A positive current collector in which a carbon layer was arranged as a coating layer on one surface of an aluminum thin film having a thickness of 12 $\mu$m was prepared. The coating layer may be considered as an interlayer.

The carbon layer was prepared by coating a composition including a carbon conductive material (Danka black) and polyvinylidene fluoride (PVDF) on an aluminum thin film and then drying. A thickness of the carbon layer arranged on one surface of the aluminum thin film was about 1 $\mu$m.

A positive electrode in which an interlayer and a positive active material layer are sequentially arranged on the positive current collector was prepared by arranging a dry positive electrode film on one surface of the positive current collector on which the carbon layer was arranged.

A mixture density of the positive active material layer was about 3.7 g/cm³. A thickness of the positive active material layer was about 100 $\mu$m.

**Preparation of coin cell**

A coin cell was prepared by utilizing the positive electrode prepared above, lithium metal as a counter electrode, and a solution, in which PTFE separator and 1.3M of $LiPF_6$ are dissolved in ethylene carbonate (EC) + ethylmethyl carbonate (EMC) + dimethyl carbonate (DMC) (3:4:3 volume ratio), as an electrolyte.

**Example 2: Dry positive electrode, bimodal positive active material, ratio of particle diameters of large diameter: small diameter positive active materials 3:1**

A dry positive electrode film, a positive electrode, and a lithium battery were manufactured in substantially the same manner as in Example 1, except that the ratio of particle diameters of the first positive active material and the second positive active material was changed to 3:1, by reducing the particle diameter of the first positive active material.

**Example 3: Dry positive electrode, bimodal positive active material, ratio of particle diameters of large diameter: small diameter positive active materials 2:1**

A dry positive electrode film, a positive electrode, and a lithium battery were manufactured in substantially the same manner as in Example 1, except that the ratio of particle diameters of the first positive active material and the second positive active material was changed to 2:1, by reducing the particle diameter of the first positive active material.

**Example 4: Dry positive electrode, bimodal positive active material, ratio of particle diameters of large diameter: small diameter positive active materials 1.5:1**

A dry positive electrode film, a positive electrode, and a lithium battery were manufactured in substantially the same manner as in Example 1, except that the ratio of particle diameters of the first positive active material and the second positive active material was changed to 1.5:1, by reducing the particle diameter of the first positive active material.

**Comparative Example 1: Dry positive electrode, bimodal positive active material, ratio of particle diameters of large diameter: small diameter positive active materials 5.3:1**

A dry positive electrode film, a positive electrode, and a lithium battery were prepared in substantially the same manner as in Example 1, except that the particle diameter ratio of the first positive active material and the second positive active material was changed to 5.3:1 by utilizing large-diameter $LiNi_{0.896}Co_{0.072}Mn_{0.032}O_2$ (hereinafter referred to as large-diameter NCM) having an average particle diameter (D50) of 16 $\mu$m as a first positive active material, and small-diameter $LiNi_{0.896}Co_{0.072}Mn_{0.032}O_2$ (hereinafter referred to as small-diameter NCM) having an average particle diameter (D50) of 3 $\mu$m as a second positive active material.

**Comparative Example 2: Dry positive electrode, bimodal positive active material, ratio of particle diameters of large diameter: small diameter positive active materials 1:1**

A dry positive electrode film, a positive electrode, and a lithium battery were prepared in substantially the same manner as in Example 1, except that a large-diameter NCM was utilized as both (e.g., simultaneously) the first positive active material and the second positive active material, and the particle diameter ratio was changed to 1:1.

**Comparative Example 3: Wet positive electrode, bimodal positive active material, ratio of particle diameters of large diameter: small diameter positive active materials 4:1**

**Preparation of positive electrode slurry**

Large-diameter $LiNi_{0.896}Co_{0.072}Mn_{0.032}O_2$ (hereinafter referred to as large-diameter NCM) having an average particle diameter (D50) of 14 $\mu$m as a first positive active material, and small-diameter $LiNi_{0.896}Co_{0.072}Mn_{0.032}O_2$ (hereinafter referred to as small-diameter NCM) having an average particle diameter (D50) of 3.5 $\mu$m as a second positive active material, a carbon conductive material (Denka Black) as a dry conductive material, and polytetrafluoroethylene (PTFE) as a dry binder were mixed in a weight ratio of 71 :25:2:2, and the mixture was mixed with N-methylpyrrolidone (NMP) in an agate mortar to prepare positive electrode slurry.

Because a substrate is or appears to be required in order to prepare a film from positive electrode slurry, it was (or appeared to be) impossible to prepare a positive electrode self-standing film.

**Preparation of positive electrode**

The prepared positive electrode slurry was bar-coated on one side of an aluminum positive current collector having a thickness of 15 $\mu$m, dried at room temperature, and then dried again under vacuum conditions at 120 °C, to prepare a stack on which a positive active material layer is arranged on the positive current collector.

A positive electrode was prepared by roll-pressing the prepared stack. A mixture density of the positive active material layer was about 3.7 g/cm$^3$. A thickness of the positive active material layer was about 100 $\mu$m.

**Preparation of coin cell**

A coin cell was prepared in substantially the same manner as in Example 1, except that the positive electrode prepared above was utilized.

Reference Example 1: Dry positive electrode, coating layer free

A dry positive electrode was manufactured in substantially the same manner as in Example 1, except that an aluminum thin film having a thickness of 10 $\mu$m on which a carbon layer was not coated was utilized as a positive current collector.

Because a portion of the positive active material layer was peeled off from the positive current collector in the prepared positive electrode, it was unlikely (e.g., impossible) to manufacture a coin cell.

**Evaluation Example 1: Measurement of particle diameter distribution**

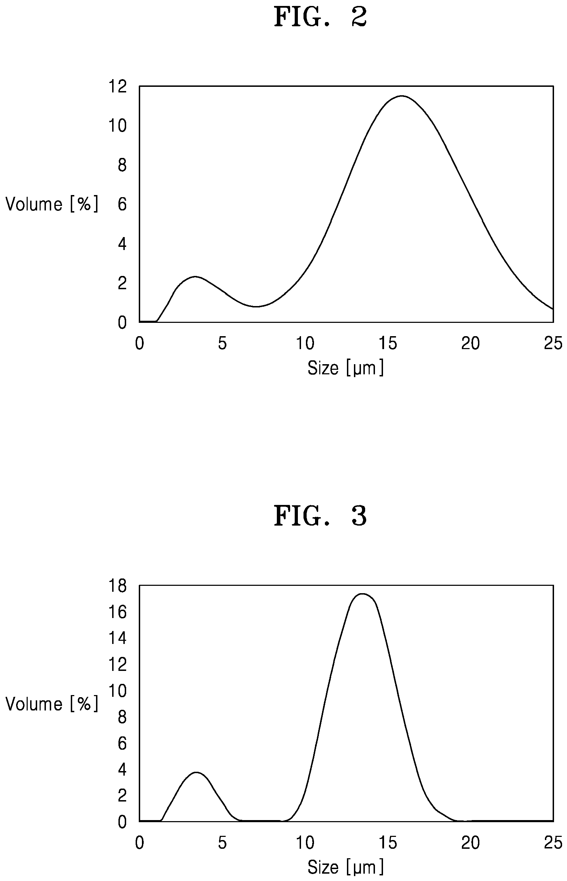

Particle diameter distribution of the dry positive active materials utilized in Example 1 and Comparative Example 1 was measured, and the results are shown in FIGS. 2 and 3 respectively. The particle diameter distribution of the dry positive active materials was measured by utilizing a laser scattering particle diameter distribution meter (Horiba, Ltd., Japan, LA-920).

As shown in FIGS. 2 and 3 respectively, the dry positive active materials utilized in Example 1 and Comparative Example 1 showed a first particle diameter peak corresponding to the first positive active material and a second particle diameter peak corresponding to the second positive active material.

In FIG. 2, the dry positive active material of Example 1 had a full width at half maximum (FWHM) of a first particle diameter peak corresponding to the first positive active material of about 4.5 μm, and a full width at half maximum (FWHM) of a second particle diameter peak corresponding to the second positive active material of about 2.5 μm.

In FIG. 3, the dry positive active material of Comparative Example 1 had a full width at half maximum (FWHM) of a first particle diameter peak corresponding to the first positive active material of about 7.5 μm, and a full width at half maximum (FWHM) of a second particle diameter peak corresponding to the second positive active material of about 3.5 μm.

As shown in FIGS. 2 and 3, the dry positive active material of Example 1 had a full width at half maximum of the first particle diameter peak and a full width at half maximum of the second particle diameter peak both (e.g., simultaneously) reduced compared to those of the dry positive active material of Comparative Example 1.

**Evaluation Example 2: Measurement of tensile strength at break**

Tensile strength at break of the dry positive electrode films prepared in Examples 1 to 4 and Comparative Examples 1 to 2 was measured, and the results are shown in Table 1.

A strip specimen with a width of 15 mm and a length of 50 mm was produced from the prepared dry positive electrode film, both of the longitudinal ends of this specimen were grasped to a tensile testing device so that the distance between the chucks would become 10 mm, tensile strength was measured under the conditions of a temperature of 23 °C and a test speed of 5 mm/min, and the tensile strength at the time of break was defined as the tensile strength at break [kPa]. The measurement results are shown in Table 1.

Table 1

|  | Tensile strength at break [kPa] |
|---|---|
| Example 1 (ratio of particle diameters 4:1) | 775.3 |
| Example 2 (ratio of particle diameters 3:1) | 690.7 |
| Example 3 (ratio of particle diameters 2:1) | 584.2 |
| Example 4 (ratio of particle diameters 1.5:1) | 553.0 |
| Comparative Example 1 (ratio of particle diameters 5.3:1) | 477.9 |
| Comparative Example 2 (ratio of particle diameters 1:1) | Not measurable |

As shown in Table 1, tensile strength of the dry positive electrode films of Examples 1 to 4 was significantly improved compared to the tensile strength of the dry positive electrode films of Comparative Examples 1 and 2.

In dry positive electrode films of Examples 1 to 4, the first positive active material was homogeneously dispersed in the dry positive electrode film by not aggregating with each other to form an aggregate. Accordingly, in the dry positive electrode films of Examples 1 to 4, the dispersibility of the binder was improved and the uniformity of binding between the first positive active material and the binder was improved. As a result, uniformity of the overall mechanical strength of the positive electrode films of Examples 1 to 4 was improved.

It was determined to be due to an effective suppression of aggregation of the first positive active material in the dry positive electrode films of Examples 1 to 4, because the first positive active material and the second positive active material had a particle diameter ratio within a certain range.

On the other hand, in the dry positive electrode films of Comparative Examples 1 and 2, the first positive active material was non-uniformly dispersed in the dry positive electrode film by aggregating with each other to form an aggregate. Accordingly, in the dry positive electrode films of Comparative Examples 1 to 2, dispersibility of the binder was reduced and uniformity of binding between the first positive active material and the binder was also reduced. As a result, uniformity of the overall mechanical strength of the positive electrode films of Comparative Examples 1 to 2 was reduced. For example, in the positive electrode films of Comparative Examples 1 and 2, tensile strength of the positive electrode films of Comparative Examples 1 and 2 was lowered due to breaks that started at a portion having a low local mechanical strength. The positive electrode film of Comparative Example 2 had significantly decreased local mechanical strength, and the mechanical strength could not be measured.

**Evaluation Example 3: Evaluation of vertical force of positive active material layer (I)**

Binding characteristics of the positive active material layers included in the positive electrodes prepared in Example 1 and Comparative Example 3, respectively, were analyzed by using SAICAS (SAICAS EN-EX, Daipla Wintes, JAPAN).

In order to measure vertical force (Fv) according to a depth, a constant velocity analysis was performed under the conditions of a clearance angle of 10°, a rake angle of 20°, a shea angle of 45°, horizontal velocity of 4 $\mu$m/s, and vertical velocity of 0.4 $\mu$m/s, by using a diamond blade with a width of 1 mm.

First, a primary constant velocity analysis was performed from a first position on a surface of the positive active material layer to the surface of the positive electrode collector, and the blade was horizontally moved along the surface of the positive electrode collector to remove the positive active material layer. Subsequently, at a position 10 $\mu$m backward from the first position, a secondary constant velocity analysis was performed under the same conditions as the primary constant velocity analysis. The data measured in the secondary constant velocity analysis were used.

The vertical force of the positive active material layer was measured in the positive active material layer, and the measured data were normalized to the area of the binding force graph, and the vertical relative force ($F_{VR}$) according to a depth of the positive active material layer was derived.

For the vertical force of the positive active material layer, the data used were measured from a first point separated 5 % from the surface of the positive active material layer to a second point separated 5 % from the surface of the electrode current collector, with respect to the total thickness of the positive active material layer. For example, data near the surface of the positive active material layer and near the surface of the electrode current collector were excluded to prevent or reduce measurement errors.

From the derived vertical relative force ($F_{VR}$) data of the positive active material layer, a rate of change of vertical relative force ($F_{VR}$) was calculated by using the following Equation 1. In some embodiments, an arithmetic mean value was also calculated from the derived data of vertical relative force ($F_{VR}$) of the positive active material layer.

Equation 1

$$\text{Rate of change of vertical relative force } (F_{VR}) = [(\text{Maximum value of vertical relative force} - \text{Minimum value of vertical relative force}/ \text{Minimum value of vertical relative force}] \times 100$$

As a result of the measurement, the rate of change of the vertical relative force of the positive active material layer included in the positive electrode of Example 1 was 200 % or less.

Therefore, it was confirmed that the positive active material layer of Example 1 had a substantially uniform binding force and distribution of compositions regardless of the position along a thickness direction of the positive active material layer.

On the other hand, the rate of change of the vertical force of the positive active material layer included in the positive electrode of Comparative Example 3 was greater than 600 %.

Therefore, it was confirmed that the positive active material layer of Comparative Example 3 had a binding force and composition distribution that were significantly changed according to a position in a thickness direction of the positive active material layer.

**Evaluation Example 4: Evaluation of horizontal force of positive active material layer (II)**

Binding characteristics of the positive active material layers included in the positive electrodes prepared in Example 1 and Comparative Example 1, respectively, were analyzed by using SAICAS (SAICAS EN-EX, Daipla Wintes, JAPAN).

In order to measure horizontal force ($F_H$) according to a depth, a constant velocity analysis was performed under the conditions of a clearance angle of 10°, a rake angle of 20°, a shear angle of 45°, horizontal velocity of 4 $\mu$m/s, and vertical velocity of 0.4 $\mu$m/s, by using a diamond blade with a width of 1 mm.

First, a primary constant velocity analysis was performed from a first position on a surface of the positive active material layer to the surface of the positive electrode collector, and the blade was horizontally moved along the surface of the positive electrode collector to remove the positive active material layer. Subsequently, at a position 10 $\mu$m backward

from the first position, a secondary constant velocity analysis was performed under the same conditions as the primary constant velocity analysis. The data measured in the secondary constant velocity analysis were used.

First horizontal force ($F_{H1}$) at a first point separated about 10 % from the surface of the positive active material layer, and second horizontal force ($F_{H2}$) at a second point separated about 10 % from the surface of the electrode current collector, with respect to the total thickness of the positive active material layer, were measured.

A ratio of the horizontal force at the first point to the horizontal forces at the second point is defined by Equation 2.

Equation 2

Ratio of horizontal force at the first point to horizontal binding force at the second point

$$(\%) = [F_{H2}/F_{H1}] \times 100$$

As a result of the measurement, the ratio of the horizontal relative forces of the positive active material layer of Example 1 was 70 % or more.

On the other hand, the ratio of the horizontal forces of the positive active material layer of Comparative Example 3 was less than 50 %.

For example, the ratio of the horizontal relative forces of the positive active material layer of Example 1 was increased compared to that of the positive active material layer of Comparative Example 1.

Therefore, it was shown that the positive active material layer of Example 1 had a more substantially uniform binding force and composition distribution compared to the positive active material layer of Comparative Example 1.

**Evaluation Example 5: Evaluation of charge/discharge characteristics**

Lithium batteries prepared in Examples 1 to 4, and Comparative Examples 1 to 2 were charged at 25 °C at a constant current of 0.1 coulomb (C) rate until the voltage reached 4.3 V (vs. Li), and then, while maintaining the voltage of 4.3 V in a constant voltage mode, the batteries were cut-off at a current of 0.05 C rate. Subsequently, the batteries were discharged at a constant current of 0.1 C rate until the voltage reached 2.8 V (formation cycle).

The lithium batteries that had undergone the formation cycle were charged at 25 °C at a constant current of 0.5 C rate until the voltage reached 4.3 V (vs. Li). Subsequently, the batteries were discharged at a constant current of 0.5 C rate until the voltage reached 2.8 V (vs. Li), and this cycle was repeated under the same conditions to the 100th cycle (repeated 100 times).

There was a 10-minute rest period after one charge/discharge cycle in all the charge/discharge cycles. A part of the results of the charge and discharge test at room temperature are shown in Table 2. The capacity retention rate at the 100th cycle is defined by Equation 3:

Equation 3

Capacity retention rate [%] = [Discharge capacity at 100th cycle / Discharge capacity at 1st cycle] × 100.

Table 2

|  | Capacity retention rate [%] |
|---|---|
| Example 1 (ratio of particle diameters 4:1) | 94.2 |
| Example 2 (ratio of particle diameters 3:1) | 93.9 |
| Example 3 (ratio of particle diameters 2:1) | 93.8 |
| Example 4 (ratio of particle diameters 1.5:1) | 93.5 |
| Comparative Example 1 (ratio of particle diameters 5.3:1) | 89.4 |
| Comparative Example 2 (ratio of particle diameters 1:1) | 88.1 |

As shown in Table 1, the lithium batteries of Examples 1 to 4 had improved room temperature lifespan characteristics compared to the lithium batteries of Comparative Examples 1 and 2.

According to an aspect of one or more embodiments of the present disclosure, as a dry electrode active material includes a first electrode active material and a second electrode active material, and the first electrode active material and the second electrode active material have a particle diameter ratio in a certain range, mechanical strength of a dry electrode film including the dry electrode active material is improved.

According to another aspect of one or more embodiments of the present disclosure, durability of an electrode is improved by including the electrode film having improved mechanical strength.

According to still another aspect of one or more embodiments of the present disclosure, cycle characteristics of a lithium battery employing the electrode with improved durability are improved.

The terminology utilized herein is utilized to describe embodiments only, and is not intended to limit the present disclosure. The singular expression includes the plural expression unless the context clearly dictates otherwise.

As utilized herein, "combination thereof" refers to a mixture, laminate, composite, copolymer, alloy, blend, reaction product, and/or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout, and duplicative descriptions thereof may not be provided the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In some embodiments, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and/or the like.

As used herein, the term "substantially," "about," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

As used herein, the terms "use," "using," and "used" may be considered synonymous with the terms "utilize," "utilizing," and "utilized," respectively.

The use of "may" when describing embodiments of the present disclosure refers to "one or more embodiments of the present disclosure."

As used herein, the singular forms "a", "an" and "the" are intended to include the plural forms as well, unless the context clearly indicates otherwise.

In the present disclosure, when particles are spherical, "size" or "diameter" indicates a particle diameter or an average particle diameter, and when the particles are non-spherical, the "size" or "diameter" indicates a major axis length or an average major axis length. That is, when particles are spherical, "diameter" indicates a particle diameter, and when the particles are non-spherical, the "diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

The vehicle, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments.

**Claims**

1. A dry electrode film comprising:

   a dry electrode active material; and
   a dry binder,
   wherein the dry electrode active material comprises a first electrode active material and a second electrode active material,
   a ratio (d1/d2) of a particle diameter (d1) of the first electrode active material to a particle diameter (d2) of the second electrode active material is greater than 1 and less than 5, and
   the dry electrode film is a free-standing film.

2. The dry electrode film of claim 1, wherein,

   the particle diameter (d1) of the first electrode active material is about 10 $\mu$m to about 50 $\mu$m, and
   the particle diameter (d2) of the second electrode active material is about 1 $\mu$m to about 10 $\mu$m.

3. The dry electrode film of claim 1 or 2, wherein the electrode active material has a bimodal particle diameter distribution comprising a first particle diameter peak corresponding to the first electrode active material and a second particle diameter peak corresponding to the second electrode active material in a particle diameter distribution diagram.

4. The dry electrode film of claim 3, wherein a full width at half maximum (FWHM) of the first particle diameter peak is about 7 $\mu$m or less,

   a full width at half maximum (FWHM) of the second particle diameter peak is about 3 $\mu$m or less, and
   the full width at half maximum (FWHM) of the first particle diameter peak is greater than the full width at half maximum (FWHM) of the second particle diameter peak.

5. The dry electrode film according to any of claims 1 to 4, wherein a weight ratio of the first electrode active material to the second electrode active material is 90:10 to 60:40.

6. The dry electrode film according to any of claims 1 to 5, wherein the dry binder is a fibrillized binder and the dry binder comprises a fluorine-based binder.

7. The dry electrode film according to any of claims 1 to 6, wherein the dry electrode film further comprises a dry conductive material, and the dry conductive material comprises a carbon-based conductive material.

8. The dry electrode film according to any of claims 1 to 7, wherein the dry electrode film does not include a residual processing solvent.

9. The dry electrode film according to any of claims 1 to 8, wherein the dry electrode film has a tensile strength of about 500 kPa or more measured according to ASTM D412.

10. An electrode (300) comprising:

an electrode current collector (200); and
an electrode active material layer (100) on at least one surface of the electrode current collector (200), wherein the electrode active material layer (300) comprises the dry electrode film according to claim 1.

11. The electrode (300) of claim 10, wherein the electrode current collector (200) comprises an interlayer (250) on the at least one surface of the electrode current collector (200), and a thickness of the interlayer (250) is about 30 % or less of a thickness of the electrode current collector (200).

12. The electrode (300) of claim 11, wherein the interlayer (250) comprises a carbon-based conductive material.

13. The electrode (300) according to any of claims 10 to 12, wherein in the electrode active material layer (100), when measured by using the surface and interfacial measuring analysis system (SAICAS), a rate of change of vertical relative force ($F_{VR}$) according to a depth, from a first point to a second point is about 300 % or less, and wherein the first point is separated about 5 % from the surface of the electrode active material layer (100) in the direction of the electrode current collector (200), and the second point is separated about 5 % from the surface of the electrode current collector (200), with respect to the total thickness of the electrode active material layer (100).

14. The electrode (300) according to any of claims 10 to 13, wherein in the electrode active material layer (100), when measured by using the surface and interfacial measuring analysis system (SAICAS), a ratio of a second horizontal force ($F_{H2}$) at a second point to a first horizontal force ($F_{H1}$) at a first point is about 50 % or more, and wherein the first point is separated about 10 % from the surface of the electrode active material layer, in the direction of the electrode current collector (200), and the second point is separated about 10 % from the surface of the electrode current collector (200), with respect to the total thickness of the electrode active material layer (100).

15. A lithium battery (1, 1000) comprising:

a positive electrode (3);
a negative electrode (2); and
an electrolyte (400) arranged between the positive electrode (3) and the negative electrode (2), and
at least one of the positive electrode (3) or the negative electrode (2) is the electrode (300) according to claim 13.

# FIG. 1

100μm NDPL

## FIG. 2

## FIG. 3

# FIG. 4A

# FIG. 4B

# FIG. 4C

100
250
200
} 300

# FIG. 4D

100
250
200
250
100
} 300

# FIG. 5

# FIG. 6A

# FIG. 6B

# FIG. 6C

# FIG. 6D

# FIG. 6E

# FIG. 6F

# FIG. 7

# FIG. 8

# FIG. 9

1000

200a  200b

Ta

100a

Tb

100b

300a

400

300b

400

300a

400

300b

400

300a

400

300b

500

SS5

D1

D2

SS6

## FIG. 10

# FIG. 11

# FIG. 12

# FIG. 13

Europäisches
Patentamt

European
Patent Office

Office européen
des brevets

## EUROPEAN SEARCH REPORT

**Application Number**

EP 23 18 6424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | US 2023/187637 A1 (KWON ILKYONG [KR] ET AL) 15 June 2023 (2023-06-15) * paragraphs [0150] - [0165]; example 1 * | 1-3,5-8, 10-15 | INV. H01M4/131 H01M4/139 H01M4/1391 |
| X | EP 3 712 990 A1 (LG CHEMICAL LTD [KR]) 23 September 2020 (2020-09-23) | 1-7,10, 15 | H01M4/36 H01M4/62 |
| Y | * paragraphs [0019], [0020], [0070], [0071], [0079] - [0082]; examples 1,2 * | 8,11,12 | H01M10/0525 |
| Y | US 2021/098770 A1 (YUDI YUDI [US] ET AL) 1 April 2021 (2021-04-01) * paragraphs [0036] - [0042], [0068] - [0079]; examples 1-7; tables 1,2 * | 8 | ADD. H01M4/04 H01M4/02 |
| Y | US 2020/259180 A1 (SHIN JOON HO [US] ET AL) 13 August 2020 (2020-08-13) * paragraphs [0068] - [0076]; figures 1-5 * | 11,12 | |
| A | US 2019/074512 A1 (CHOI SU AN [KR] ET AL) 7 March 2019 (2019-03-07) * paragraphs [0079] - [0099]; tables 1,2 * | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 8 December 2023 | Barenbrug-van Druten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 6424

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2023

| Patent document cited in search report | | | Publication date | Patent family member(s) | | | Publication date |
|---|---|---|---|---|---|---|---|
| US | 2023187637 | A1 | 15-06-2023 | CN | 116264267 | A | 16-06-2023 |
| | | | | EP | 4199136 | A1 | 21-06-2023 |
| | | | | JP | 2023088317 | A | 26-06-2023 |
| | | | | KR | 20230090008 | A | 21-06-2023 |
| | | | | US | 2023187637 | A1 | 15-06-2023 |
| EP | 3712990 | A1 | 23-09-2020 | CN | 111492510 | A | 04-08-2020 |
| | | | | EP | 3712990 | A1 | 23-09-2020 |
| | | | | EP | 4266418 | A1 | 25-10-2023 |
| | | | | JP | 7062173 | B2 | 06-05-2022 |
| | | | | JP | 2021507497 | A | 22-02-2021 |
| | | | | KR | 20190093453 | A | 09-08-2019 |
| | | | | US | 2020388830 | A1 | 10-12-2020 |
| | | | | WO | 2019151834 | A1 | 08-08-2019 |
| US | 2021098770 | A1 | 01-04-2021 | CN | 112424973 | A | 26-02-2021 |
| | | | | EP | 3794657 | A1 | 24-03-2021 |
| | | | | JP | 2021523531 | A | 02-09-2021 |
| | | | | KR | 20210006899 | A | 19-01-2021 |
| | | | | US | 2021098770 | A1 | 01-04-2021 |
| | | | | WO | 2019222110 | A1 | 21-11-2019 |
| US | 2020259180 | A1 | 13-08-2020 | US | 2020259180 | A1 | 13-08-2020 |
| | | | | WO | 2020150266 | A1 | 23-07-2020 |
| US | 2019074512 | A1 | 07-03-2019 | KR | 20170106037 | A | 20-09-2017 |
| | | | | US | 2019074512 | A1 | 07-03-2019 |
| | | | | WO | 2017155184 | A1 | 14-09-2017 |

EPO FORM P0459

For more details about this annex : see Official Journal of the European Patent Office, No. 12/82